(19) Europäisches Patentamt / European Patent Office / Office européen des brevets

(11) **EP 4 647 524 A1**

(12) **EUROPEAN PATENT APPLICATION**
published in accordance with Art. 153(4) EPC

(43) Date of publication:
**12.11.2025 Bulletin 2025/46**

(21) Application number: **24738650.1**

(22) Date of filing: **05.01.2024**

(51) International Patent Classification (IPC):
$C22C\ 38/00^{(2006.01)}$  $C22C\ 38/60^{(2006.01)}$
$H01F\ 1/147^{(2006.01)}$  $C21D\ 8/12^{(2006.01)}$
$C21D\ 9/46^{(2006.01)}$

(52) Cooperative Patent Classification (CPC):
**C22C 38/00; C22C 38/60; H01F 1/147;** C21D 8/12;
C21D 9/46; Y02P 10/20

(86) International application number:
**PCT/JP2024/000088**

(87) International publication number:
**WO 2024/147360 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2023 JP 2023001369**

(71) Applicant: **NIPPON STEEL CORPORATION**
Chiyoda-ku
**Tokyo 100-8071 (JP)**

(72) Inventors:
• **ATSUMI, Haruhiko**
**Tokyo 100-8071 (JP)**
• **YAMAGATA, Ryutaro**
**Tokyo 100-8071 (JP)**

• **KATAOKA, Takashi**
**Tokyo 100-8071 (JP)**
• **KUNITA, Yuki**
**Tokyo 100-8071 (JP)**
• **YANAI, Hironobu**
**Tokyo 100-8071 (JP)**
• **TOMITA, Yuki**
**Tokyo 100-8071 (JP)**
• **KASHIDA, Yuji**
**Tokyo 100-8071 (JP)**
• **MATSUSHITA, Kohya**
**Tokyo 100-8071 (JP)**

(74) Representative: **Vossius & Partner**
**Patentanwälte Rechtsanwälte mbB**
**Siebertstrasse 3**
**81675 München (DE)**

(54) **GRAIN-ORIENTED ELECTRICAL STEEL SHEET**

(57) Provided is a grain-oriented electrical steel sheet that has sufficient magnetic flux density and iron loss characteristics, and can also reduce magnetostriction. A grain-oriented electrical steel sheet according to the present embodiment contains, in mass%, Si: 2.5 to 4.5%, Mn: 0.01 to 1.00%, N: 0 to 0.010%, C: 0 to 0.010%, sol. Al: 0 to 0.010%: one or more kinds of element selected from a group consisting of S and Se: 0 to 0.010% in total, and Ti: more than 0 to 0.010%, the remainder including Fe and impurities. When, by measuring crystal orientations at a plurality of measurement points on a surface of the grain-oriented electrical steel sheet that are arranged in a grid at a pitch of 2 mm in first and second directions orthogonal to each other using an X-ray diffraction method, with respect to each measurement point, an arithmetic mean value of misorientations of all the adjacent points from the first to fifth adjacent points is defined as a KAM of the corresponding measurement point, an arithmetic mean value KAMave of KAMs of the measurement points is 8.0° or less, and a magnetic flux density $B_8$ is 1.910 T or more.

FIG.9

**Description**

TECHNICAL FIELD

The present disclosure relates to a grain-oriented electrical steel sheet.

BACKGROUND ART

Grain-oriented electrical steel sheets serve as soft magnetic materials, and are used as an iron core material for electrical equipment such as a transformer. Grain-oriented electrical steel sheets are composed of crystal grains (Goss-oriented grains) oriented in the {110}<001> orientation, called the Goss orientation. The sizes of Goss-oriented grains are in the order of mm. Grain-oriented electrical steel sheets are produced by preferentially growing Goss-oriented grains through a phenomenon called secondary recrystallization.

Excellent magnetic properties (high magnetic flux density and low iron loss) are required for grain-oriented electrical steel sheets. For grain-oriented electrical steel sheets, the higher the degree of alignment of Goss-oriented grains is, the more excellent the magnetic properties can be.

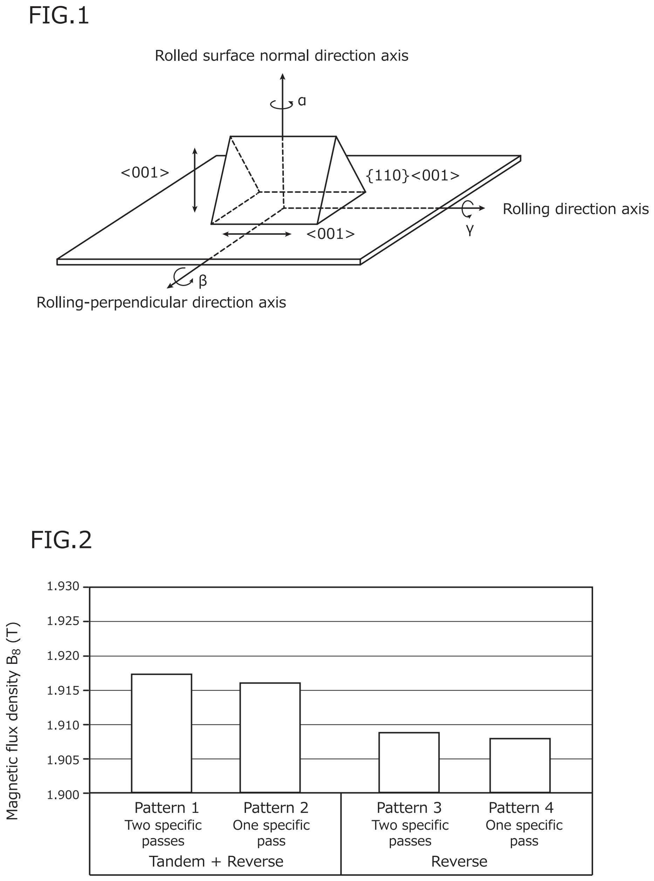

The degree of alignment of Goss-oriented grains due to secondary recrystallization can be evaluated based on deviation angles from the ideal Goss orientation. FIG. 1 is a schematic diagram of deviation angles from the ideal Goss orientation. Referring to FIG. 1, the deviation angles include: an $\alpha$ angle, which is the angle of rotation around a rolled surface normal direction axis extending in a normal direction of a rolled surface of a grain-oriented electrical steel sheet; a $\beta$ angle, which is the angle of rotation around a rolling-perpendicular direction axis orthogonal to a rolling direction axis and the rolled surface normal direction axis with respect to the rolled surface; and a $\gamma$ angle, which is the angle of rotation around the rolling direction axis. Accordingly, the relationship between the $\alpha$, $\beta$, and $\gamma$ angles, and the magnetic properties (magnetic flux density and iron loss) of a grain-oriented electrical steel sheet has been studied conventionally.

In a grain-oriented electrical steel sheet proposed in JP 2018-48377A (Patent Literature 1), a region where the root mean square of the $\alpha$ and $\beta$ angles is 5.0° or less and the $\beta$ angle is 0.50° or less has an area ratio of 20% or less. This suppresses the deterioration of iron loss, according to Patent Literature 1.

In a grain-oriented electrical steel sheet proposed in JP 2001-192785A (Patent Literature 2), the average $\alpha$ angle is 6° or less, and the amount $<\sigma(\beta)>$ obtained by averaging the standard deviations $\sigma(\beta)$ of a distribution of $\beta$ angles in the rolling-perpendicular direction (width direction) is 2° or less. This makes the $\beta$ angles uniform within the steel sheet and suppresses the deterioration of iron loss, according to Patent Literature 2.

It is known that when the $\alpha$ and $\beta$ angles are small, the effect of the $\gamma$ angle on magnetic properties is small.

CITATION LIST

PATENT LITERATURES

Patent Literature 1: JP 2018-48377A
Patent Literature 2: JP 2001-192785A

SUMMARY OF INVENTION

TECHNICAL PROBLEM

As described above, the grain-oriented electrical steel sheets proposed in Patent Literatures 1 and 2 attempt to improve iron loss by adjusting the deviation angle from the ideal Goss orientation.

Meanwhile, transformers emit noise while energized. Therefore, there is a need to reduce transformer noise. One of the noise sources of transformers is the iron core. And one of the causes of the noise of the iron core is the magnetostriction phenomenon of the grain-oriented electrical steel sheet. The magnetostriction phenomenon is a phenomenon in which when the grain-oriented electrical steel sheet is magnetized by an alternating current, the outer shape of the electrical steel sheet slightly changes as the strength of the magnetization changes. This magnetostriction generates vibration in the iron core, and this vibration propagates to external structures such as the transformer tank, resulting in noise. Therefore, grain-oriented electrical steel sheets are required to have not only excellent magnetic properties but also reduced magnetostriction. Patent Literatures 1 and 2 do not consider how to reduce magnetostriction.

It is an object of the present disclosure to provide a grain-oriented electrical steel sheet that has sufficient magnetic flux density and iron loss characteristics, and can also reduce magnetostriction.

SOLUTION TO PROBLEM

A grain-oriented electrical steel sheet according to the present disclosure includes

a base steel sheet,
wherein a chemical composition of the base steel sheet contains, in mass%,

Si: 2.5 to 4.5%,
Mn: 0.01 to 1.00%,
N: 0 to 0.010%,
C: 0 to 0.010%,
sol. Al: 0 to 0.010%,
one or more kinds of element selected from the group consisting of S and Se: 0 to 0.010% in total,
Ti: more than 0 to 0.010%,
Ni: 0 to 1.00%,
Cr: 0 to 1.00%,
Cu: 0 to 1.00%,
P: 0 to 0.50%,
Mo: 0 to 0.10%,
Sn: 0 to 0.50%,
Sb: 0 to 0.50%,
Bi: 0 to 0.0500%, and
the remainder including Fe and impurities,

when, by measuring crystal orientations at a plurality of measurement points on a surface of the grain-oriented electrical steel sheet that are arranged in a grid at a pitch of 2 mm in a first direction and in a second direction perpendicular to the first direction using an X-ray diffraction method, with respect to each measurement point, another measurement point that is adjacent to the corresponding measurement point is defined as a first adjacent point, another measurement point that is adjacent to an n-th (n is a natural number) adjacent point is defined as an (n+1)-th adjacent point, and an arithmetic mean value of misorientations of all the adjacent points from the first to fifth adjacent points is defined as a KAM of the corresponding measurement point, an arithmetic mean value KAMave of KAMs of the measurement points is 8.0° or less, and
a magnetic flux density $B_8$ is 1.910 T or more.

ADVANTAGEOUS EFFECTS OF INVENTION

The grain-oriented electrical steel sheet of the present disclosure has sufficient magnetic flux density and iron loss characteristics, and can also reduce magnetostriction.

BRIEF DESCRIPTION OF DRAWINGS

[FIG. 1] FIG. 1 is a schematic diagram of deviation angles from the ideal Goss orientation.
[FIG. 2] FIG. 2 is a graph of magnetic flux densities $B_8$ (T) of grain-oriented electrical steel sheets produced by executing cold rolling processes of Patterns 1 to 4.
[FIG. 3] FIG. 3 is a graph of iron losses $W_{17/50}$ (W/kg) in Patterns 1 to 4.
[FIG. 4] FIG. 4 is a graph of magnetostriction $\lambda p\text{-}p@1.9T$ ($\times 10^{-6}$) in Patterns 1 to 4.
[FIG. 5] FIG. 5 is a graph of $\alpha$ angles (°) and $\beta$ angles (°) in Patterns 1 to 4.
[FIG. 6] FIG. 6 is a graph of crystal grain sizes in Patterns 1 to 4.
[FIG. 7] FIG. 7 is a schematic diagram illustrating a KAM calculation method.
[FIG. 8] FIG. 8 is a diagram of an example of an orientation dispersed map showing the magnitudes of KAMs at measurement points of a grain-oriented electrical steel sheet.
[FIG. 9] FIG. 9 is a graph of KAMave in Patterns 1 to 4.
[FIG. 10] FIG. 10 is a perspective view of a grain-oriented electrical steel sheet according to the present embodiment.
[FIG. 11] FIG. 11 is a schematic diagram of a tandem rolling mill.
[FIG. 12] FIG. 12 is a schematic diagram of a multi-stage rolling mill that is used in a reverse rolling process.

DESCRIPTION OF EMBODIMENTS

The inventors of the present disclosure studied a grain-oriented electrical steel sheet that has sufficient magnetic flux density and iron loss characteristics, and also can reduce magnetostriction. As a result, the following findings were obtained.

The inventors of the present disclosure first produced grain-oriented electrical steel sheets using different production methods and investigated, for each of the grain-oriented electrical steel sheets, the magnetic flux density $B_8$ (T), iron loss $W_{17/50}$ (W/kg), and magnetostriction $\lambda$p-p@1.9T. Here, magnetostriction $\lambda$p-p@1.9T refers to the absolute value of the difference between the maximum and minimum values of the magnetostriction deformation of a specimen when it is excited to 1.9 T by an alternating current, the absolute value being converted to the value of the magnetostriction deformation on the assumption that the reference length of the specimen is 1 m. Specifically, the following experiments were conducted.

A plurality of steel slabs were prepared that have a chemical composition containing, in mass%, Si: 3.3%, Mn: 0.08%, N: 0.008%, C: 0.080%, sol. Al: 0.025%, S: 0.024%, and Ti: 0.002%, the remainder consisting of Fe and impurities.

A hot rolling process was performed on the steel slabs. Specifically, the steel slabs were heated to 1340°C in a heating furnace. Hot rolling was performed on the heated steel slabs to produce hot-rolled steel sheets with a thickness of 2.3 mm.

The hot-rolled steel sheets were subjected to a hot-rolled sheet annealing process at a hot-rolled sheet annealing temperature from 800 to 1200°C with a holding time from 10 to 300 seconds. After the hot-rolled sheet annealing process, a cold rolling process was performed to produce cold-rolled steel sheets with a thickness of 0.22 mm.

Cold rolling was performed in the following four patterns.

(Pattern 1) Two specific passes of tandem rolling + reverse rolling

The hot-rolled steel sheets after the hot-rolled sheet annealing process were rolled in a tandem rolling mill with work rolls of an average diameter of 450 mm to produce steel sheets with a thickness of 0.8 mm. Then, reverse rolling was performed on the steel sheets in a multi-stage rolling mill with work rolls of an average diameter of 100 mm to produce cold-rolled steel sheets with a thickness of 0.22 mm.

Furthermore, in the tandem rolling, among several passes, two specific passes with the following conditions were performed. In the specific passes, the rolling shape ratio was 6.00 or more and the nominal rolling reduction strain was 0.40 or more. The rolling shape ratio in each pass is defined by the following formula.

[Formula 1]

$$\text{Rolling shape ratio} = \frac{2\sqrt{R(Tin - Tout)}}{Tin + Tout}$$

Here, R in the formula is the radius of the work rolls (mm), Tin is the thickness (mm) of the steel sheet at the entry side of the rolling stand of the tandem rolling mill, Tout is the thickness (mm) of the steel sheet at the exit side of the rolling stand of the tandem rolling mill.

Also, the nominal rolling reduction strain in each pass is defined by the following formula.

[Formula 2]

$$\text{Nominal rolling reduction strain} = \frac{3}{\sqrt{2}} \ln\left(\frac{Tin}{Tout}\right)$$

(Pattern 2) One specific pass of tandem rolling + reverse rolling

The hot-rolled steel sheets after the hot-rolled sheet annealing process were rolled in a tandem rolling mill with work rolls of an average diameter of 450 mm to produce steel sheets with a thickness of 0.8 mm. Then, reverse rolling was performed on the steel sheets in a multi-stage rolling mill with work rolls of an average diameter of 100 mm to produce cold-rolled steel sheets with a thickness of 0.22 mm.

Furthermore, in the tandem rolling, among several tandem rolling passes, one specific pass was introduced where the rolling shape ratio was 6.00 or more and the nominal rolling reduction strain was 0.40 or more. The condition was such that larger additional shear strain was introduced to the surface layer of the steel sheet in the case of one specific pass than in the case of two specific passes.

(Pattern 3) Only two specific passes of reverse rolling

Reverse rolling was performed on the hot-rolled steel sheets after the hot-rolled sheet annealing process in a multi-stage rolling mill with work rolls of an average diameter of 100 mm to produce cold-rolled steel sheets with a thickness of 0.22 mm. In other words, in Pattern 3, in contrast to Patterns 1 and 2, no tandem rolling was performed before the reverse rolling. Note that in the reverse rolling, among several reverse rolling passes, two specific passes were introduced where the rolling shape ratio was 6.00 or more and the nominal rolling reduction strain was 0.40 or more.

(Pattern 4) Only one specific pass of reverse rolling

Reverse rolling was performed on the hot-rolled steel sheets after the hot-rolled sheet annealing process in a multi-stage rolling mill with work rolls of an average diameter of 100 mm to produce cold-rolled steel sheets with a thickness of 0.22 mm. In other words, in Pattern 4, similar to Pattern 3, no tandem rolling was performed before the reverse rolling. Note that in the reverse rolling, among several reverse rolling passes, one specific pass was introduced where the rolling shape ratio was 6.00 or more and the nominal rolling reduction strain was 0.40 or more.

A decarburization annealing process was performed on the cold-rolled steel sheets after the cold rolling process of Patterns 1 to 4. Specifically, the temperatures of the cold-rolled steel sheets in the range of 450 to 800°C were increased to 870°C at 400°C/s, and then were held at the decarburization annealing temperature of 830 to 950°C for 80 to 150 seconds. Then, the cold-rolled steel sheets were left to be cooled to room temperature, and decarburized annealed steel sheets were obtained.

An annealing separator composed mainly of MgO was applied to the surfaces of the decarburized annealed steel sheets. Then, finishing annealing was performed on the decarburized annealed steel sheets to which the annealing separator was applied to produce the finished annealed steel sheets. The finishing annealing temperature in the finishing annealing was 1100°C to 1200°C, and the holding time at the finishing annealing temperature was 5 to 30 hours. A secondary coating formation process was performed on the steel sheets after the finishing annealing process. Specifically, a secondary coating forming agent composed mainly of colloidal silica and phosphate was applied to the surface of the finished annealed steel sheet of each test number. Then, the finished annealed steel sheets to which the secondary coating forming agent was applied were baked under the same conditions, whereby secondary coatings were formed on the respective primary coatings. With the above-described production processes, grain-oriented electrical steel sheets were produced.

The chemical composition of the produced grain-oriented electrical steel sheets was a chemical composition containing, Si: 3.3%, Mn: 0.08%, N: <0.002%, C: 0.002%, sol. Al: <0.001%, S: <0.001%, and Ti: 0.002%, the remainder consisting of Fe and impurities. Here, the numerical values with "<" each indicate that the standard curve of the analyzer was only up to the corresponding numerical value after the "<". Specifically, "<0.001%" indicates that the standard curve of the analyzer was only up to 0.001%.

The produced grain-oriented electrical steel sheets were subjected to a magnetic flux density measurement test, an iron loss evaluation test, and a magnetostriction evaluation test, which are shown in the later-described examples.

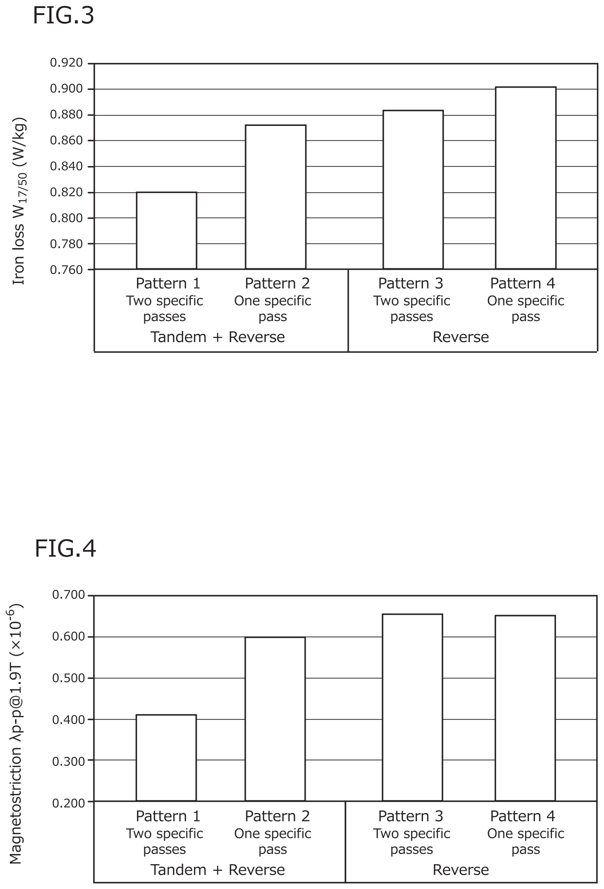

FIG. 2 is a graph of magnetic flux densities $B_8$ (T) in Patterns 1 to 4. FIG. 3 is a graph of iron losses $W_{17/50}$ (W/kg) in Patterns 1 to 4. FIG. 4 is a graph of magnetostriction $\lambda$p-p@1.9T($\times 10^{-6}$) in Patterns 1 to 4.

Referring to FIG. 2, regarding the magnetic flux density $B_8$, the magnetic flux densities $B_8$ in Patterns 1 and 2 (where tandem rolling + reverse rolling were executed in the cold rolling process) were superior to those in Patterns 3 and 4 (where only reverse rolling was executed in the cold rolling process). Furthermore, when comparing Pattern 1 with Pattern 2, the magnetic flux density $B_8$ of Pattern 1 was slightly higher than the magnetic flux density $B_8$ of Pattern 2. Furthermore, referring to FIG. 3, with respect to the iron loss $W_{17/50}$, the iron loss $W_{17/50}$ of Pattern 1 was significantly lower than those of Patterns 2 to 4.

Also, referring to FIG. 4, with respect to the magnetostriction $\lambda$p-p@1.9T, the magnetostriction $\lambda$p-p@1.9T of Pattern 1 was significantly lower than those of Patterns 2 to 4.

Based on the above results, Pattern 1, where tandem rolling and reverse rolling were performed in the cold rolling process and two specific passes of tandem rolling were performed, has excellent magnetic flux density and excellent iron loss, and significantly low magnetostriction. Therefore, by analyzing the structures of the grain-oriented electrical steel sheets produced in Pattern 1, the inventors of the present disclosure attempted to identify the configuration of a grain-oriented electrical steel sheet that has excellent magnetic flux density and excellent iron loss, and can also reduce magnetostriction.

At first, the inventors of the present disclosure considered that $\alpha$ and $\beta$ angles, which are the deviation angles from the ideal Goss orientation, affect magnetic flux density, iron loss, and magnetostriction, as described in Patent Literatures 1 and 2. Therefore, $\alpha$ and $\beta$ angles in grain-oriented electrical steel sheets produced in Patterns 1 to 4 were obtained by the following method.

From a surface (rolled surface) of each of the grain-oriented electrical steel sheets in Patterns 1 to 4, rectangular regions of 250 mm in a first direction and 60 mm in a second direction orthogonal to the first direction were defined as observation regions. Note that in the example, the first direction is a steel sheet rolling direction and the second direction is a width direction orthogonal to the steel sheet rolling direction. X-ray diffraction using the Laue method was performed at measurement points (3906 points in total) located in a grid at intervals of 2 mm in the first direction and the second direction on each observation region. The spot diameter at the time of measurement was 1 mm.

X-ray diffraction was performed on 10 observation regions of the grain-oriented electrical steel sheet of each pattern to obtain $\alpha$ and $\beta$ angles at each measurement point on the observation regions. The arithmetic mean value of the obtained $\alpha$ angles at the measurement points was defined as the $\alpha$ angle (°) of the corresponding pattern. Similarly, the arithmetic mean value of the obtained $\beta$ angles at the measurement points was defined as the $\beta$ angle (°) of the corresponding pattern.

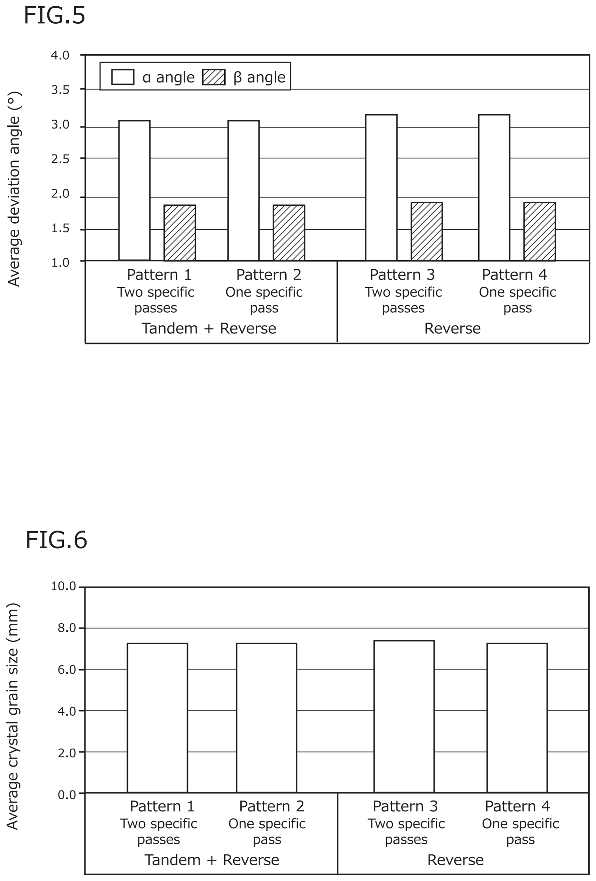

FIG. 5 is a graph of $\alpha$ angles (°) and $\beta$ angles (°) in Patterns 1 to 4. Referring to FIG. 5, the $\alpha$ and $\beta$ angles in Patterns 1 and 2 were slightly lower than those in Patterns 3 and 4, which correlated with the results of the magnetic flux densities $B_8$. However, the $\alpha$ and $\beta$ angles in Pattern 1 were substantially the same as those in Pattern 2. Therefore, the improvement in iron loss and magnetostriction of the grain-oriented electrical steel sheets in Pattern 1 did not correlate with the $\alpha$ and $\beta$ angles.

Accordingly, the inventors of the present disclosure further investigated the correlation between iron loss and magnetostriction, and other configurations of the grain-oriented electrical steel sheets that are different from the $\alpha$ and $\beta$ angles.

The inventors of the present disclosure investigated the relationship between the crystal grain size, iron loss, and magnetostriction of the grain-oriented electrical steel sheets in Pattern 1 to Pattern 4. Specifically, crystal orientation data obtained by the above-mentioned X-ray diffraction was used to identify a region constituted by grain boundaries with a misorientation angle of 1° or more and constituted by one or more measurement points, as a single crystal grain. The equivalent circle diameter of the identified crystal grain was determined. The arithmetic mean value of the equivalent circle diameters of the obtained crystal grains was defined as the average crystal grain size (mm) in the corresponding pattern.

FIG. 6 is a graph of average crystal grain sizes in Patterns 1 to 4. Referring to FIG. 6, the average crystal grain sizes in Patterns 1 to 4 were substantially the same and did not correlate with iron loss and magnetostriction.

As described above, no correlation was found between the $\alpha$ angle, the $\beta$ angle, and the average crystal grain size on one hand, and iron loss and magnetostriction on the other hand. Therefore, the inventors of the present disclosure focused on misorientation of a rolled surface of a grain-oriented electrical steel sheet, as a new viewpoint of the configuration of the grain-oriented electrical steel sheet. Specifically, the misorientation of a surface (rolled surface) of a grain-oriented electrical steel sheet was obtained by the following method.

X-ray diffraction using the Laue method was performed on the surfaces (rolled surfaces) of the grain-oriented electrical steel sheets. Specifically, on the surfaces (rolled surfaces) of the grain-oriented electrical steel sheets, rectangular regions of 250 mm in the first direction and 60 mm in the second direction orthogonal to the first direction were defined as observation regions. X-ray diffraction using the Laue method was performed at measurement points (3906 points in total) arranged in a grid at intervals of 2mm in the first direction and the second direction on one or more observation regions at an arbitrary position, and the crystal orientation of each measurement point was obtained. At this time, the spot diameter at the time of measurement was set to 1 mm. Based on the crystal orientations obtained at the measurement points, boundaries with misorientation angles of 1 to 180° are defined as grain boundaries. Regions surrounded by the grain boundaries are then defined as crystal grains. Upon completion of measurement in each observation region, it is determined whether or not the total number of identified crystal grains is 100 or more. When the total number of identified crystal grains is 100 or more, KAMs for all the observation regions at which the measurement was conducted were obtained by the following method.

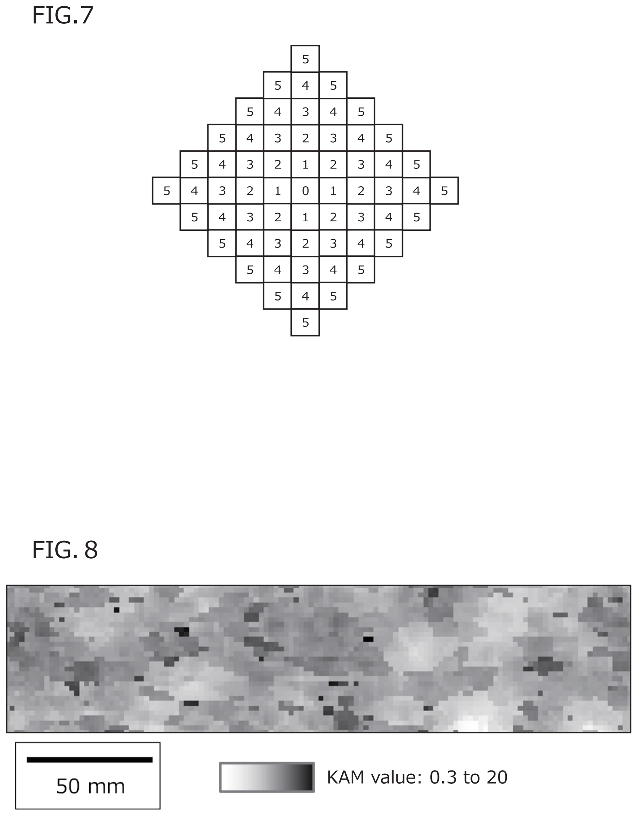

Misorientation of each measurement point from an adjacent measurement point was analyzed. Specifically, referring to FIG. 7, when focusing on one measurement point (denoted by the reference numeral "0" in FIG. 7), other measurement points that are adjacent to the corresponding measurement point were defined as first adjacent points (denoted by the reference numeral "1" in FIG. 7). Other measurement points that are adjacent to the first adjacent points were defined as second adjacent points (denoted by the reference numeral "2" in FIG. 7). Other measurement points that are adjacent to the second adjacent points were defined as third adjacent points (denoted by the reference numeral "3" in FIG. 7). Other measurement points that are adjacent to the third adjacent points were defined as fourth adjacent points (denoted by the reference numeral "4" in FIG. 7). Other measurement points that are adjacent to the fourth adjacent points were defined as fifth adjacent points (denoted by the reference numeral "5" in FIG. 7).

As described above, measurement points that are adjacent to the n-th (n is a natural number) adjacent points were defined as the (n+1)-th adjacent points. The arithmetic mean value of the misorientations of all the adjacent points from the first adjacent points to the fifth adjacent points was then defined as the KAM (Kernel Average Misorientation) of the corresponding measurement point (denoted by the reference numeral "0" in FIG. 7). An orientation dispersed map showing the magnitudes of the KAMs at the measurement points is shown in FIG. 8. The arithmetic mean value of the obtained KAMs at the respective measurement points was defined as KAMave.

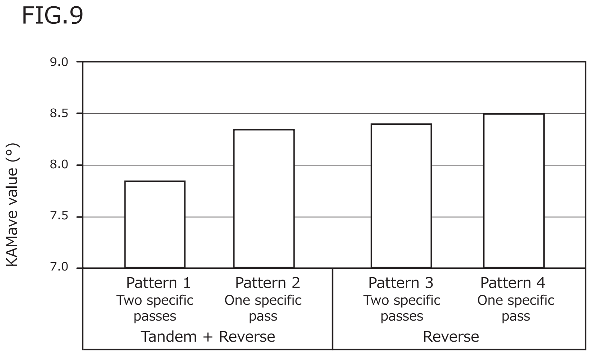

FIG. 9 is a graph of KAMave in Patterns 1 to 4. Referring to FIG. 9, the KAMave in Pattern 1 was significantly smaller than those in the other Patterns, and correlated with the results of iron loss and magnetostriction.

Based on the results of the study above, the inventors of the present disclosure considered that if KAMave is less than 8.0°, iron loss and magnetostriction are sufficiently reduced. The reason for this is not clear, but the inventors of the present disclosure consider as follows. The crystal orientations of grain-oriented electrical steel sheets are aligned with the Goss orientation. However, there are also deviations (i.e., misorientations) in crystal orientations of grain-oriented electrical steel sheets. It is conceivable that, for grain-oriented electrical steel sheets with large misorientations, the magnetic domain structure is altered, resulting in increased iron loss and magnetostriction.

In the grain-oriented electrical steel sheet of the present embodiment, KAMave is 8.0° or less. It is conceivable that if KAMave is sufficiently low, namely, 8.0° or less, the magnetic domain structure will remain appropriate, resulting in excellent iron loss characteristics and magnetostriction characteristics. Note that there is also a possibility that excellent iron loss and magnetostriction characteristics are obtained due to a mechanism different from the mechanism of this estimation. However, it has been proven in the later-described examples that KAMave set to 8.0° or less can achieve excellent iron loss and magnetostriction.

The grain-oriented electrical steel sheet of the present embodiment that was accomplished based on the above-described technical idea has the following configuration.

A grain-oriented electrical steel sheet according to a first configuration includes a base steel sheet. A chemical composition of the base steel sheet contains, in mass%, Si: 2.5 to 4.5%, Mn: 0.01 to 1.00%, N: 0 to 0.010%, C: 0 to 0.010%, sol. Al: 0 to 0.010%, one or more kinds of element selected from the group consisting of S and Se: 0 to 0.010% in total, Ti: more than 0 to 0.010%, Ni: 0 to 1.00%, Cr: 0 to 1.00%, Cu: 0 to 1.00%, P: 0 to 0.50%, Mo: 0 to 0.10%, Sn: 0 to 0.50%, Sb: 0 to 0.50%, Bi: 0 to 0.0500%, and the remainder including Fe and impurities. When, by measuring crystal orientations at a plurality of measurement points on a surface of the grain-oriented electrical steel sheet that are arranged in a grid at a pitch of 2 mm in a first direction and in a second direction perpendicular to the first direction using an X-ray diffraction method, with respect to each measurement point, another measurement point that is adjacent to the corresponding measurement point is defined as a first adjacent point, another measurement point that is adjacent to an n-th (n is a natural number) adjacent point is defined as an (n+1)-th adjacent point, and an arithmetic mean value of misorientations of all the adjacent points from the first to fifth adjacent points is defined as a KAM of the corresponding measurement point, an arithmetic mean value KAMave of KAMs of the measurement points is 8.0° or less. Furthermore, a magnetic flux density $B_8$ is 1.910 T or more.

A grain-oriented electrical steel sheet according to a second configuration is directed to the grain-oriented electrical steel sheet according to the first configuration,

wherein the chemical composition of the base steel sheet contains one or more kinds of elements selected from the group consisting of, in mass%,

Ni: 0.01 to 1.00%,
Cr: 0.01 to 1.00%,
Cu: 0.01 to 1.00%,
P: 0.01 to 0.50%,
Mo: 0.01 to 0.10%,
Sn: 0.01 to 0.50%,
Sb: 0.01 to 0.50%, and
Bi: 0.0001 to 0.0500%.

Hereinafter, the grain-oriented electrical steel sheet of the present embodiment will be described. Note that "%" with respect to elements means mass percent unless otherwise noted.

[Regarding Configuration of Grain-Oriented Electrical Steel Sheet]

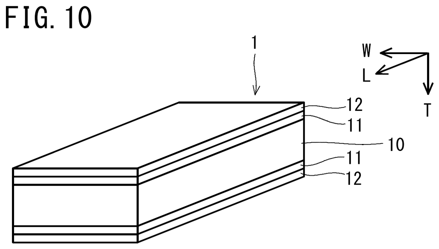

FIG. 10 is a perspective view of a grain-oriented electrical steel sheet according to the present embodiment. The direction L in the figure means the rolling direction of the grain-oriented electrical steel sheet. The direction W means the rolling-perpendicular direction (sheet width direction) of the grain-oriented electrical steel sheet. The direction T means the rolled surface normal direction (sheet thickness direction) of the grain-oriented electrical steel sheet.

Referring to FIG. 10, the grain-oriented electrical steel sheet 1 according to the present embodiment includes a base steel sheet 10, an underlayer coating 11, and a secondary coating 12. The underlayer coating 11 is formed on the base steel sheet 10. In FIG. 10, the underlayer coating 11 is formed on a surface of the base steel sheet 10 while being in direct contact with the surface of the base steel sheet 10. The underlayer coating 11 is either a primary coating composed mainly of forsterite, or an intermediate layer composed mainly of oxides such as silica and alumina. When placing importance on the reduction of iron loss, the primary coating is used as the underlayer coating 11. When placing importance on punching workability, the intermediate layer is used as the underlayer coating 11. The underlayer coating 11 is a well-known coating.

The secondary coating 12 is formed on the underlayer coating 11. As shown in FIG. 10, an underlayer coating 11 and a secondary coating 12 are formed on each of a pair of surfaces of the base steel sheet 10 (i.e., the front and reverse sides of the base steel sheet 10). The secondary coating 12 is a well-known insulating coating.

It is well known that a grain-oriented electrical steel sheet includes a base steel sheet, an underlayer coating, and a secondary coating.

[Features of Grain-Oriented Electrical Steel Sheet 1 of Present Embodiment]

The grain-oriented electrical steel sheet 1 of the present embodiment satisfies Features 1 to 3.

(Feature 1)

The chemical composition of the base steel sheet 10 contains, in mass%, Si: 2.5 to 4.5%, Mn: 0.01 to 1.00%, N: 0 to 0.010%, C: 0 to 0.010%, sol. Al: 0 to 0.010%, one or more kinds of element selected from the group consisting of S and Se: 0 to 0.010% in total, Ti: more than 0 to 0.010%, Ni: 0 to 1.00%, Cr: 0 to 1.00%, Cu: 0 to 1.00%, P: 0 to 0.50%, Mo: 0 to 0.10%, Sn: 0 to 0.50%, Sb: 0 to 0.50%, Bi: 0 to 0.0500%, the remainder being Fe and impurities.

(Feature 2)

When, by measuring crystal orientations at a plurality of measurement points on a surface of the grain-oriented electrical steel sheet that are arranged in a grid at a pitch of 2 mm in a first direction and in a second direction perpendicular to the first direction using an X-ray diffraction method, with respect to each measurement point, another measurement point that is adjacent to the corresponding measurement point is defined as a first adjacent point, another measurement point that is adjacent to an n-th (n is a natural number) adjacent point is defined as an (n+1)-th adjacent point, and an arithmetic mean value of misorientations of all the adjacent points from the first to fifth adjacent points is defined as a KAM of the corresponding measurement point, an arithmetic mean value KAMave of KAMs of the measurement points is 8.0° or less.

(Feature 3)

The magnetic flux density $B_8$ is 1.910 T or more.

The following describes Features 1 to 3.

[(Feature 1) Regarding Chemical Composition]

The chemical composition of the base steel sheet 10 of the grain-oriented electrical steel sheet 1 contains the following elements:

Si: 2.5 to 4.5%

Silicon (Si) increases the electrical resistance (specific resistance) of the steel sheet and reduces the iron loss of the grain-oriented electrical steel sheet 1. If the Si content is less than 2.5%, the above-described effects cannot be sufficiently obtained. On the other hand, if the Si content exceeds 4.5%, the steel sheet will become brittle.

Therefore, the Si content is 2.5 to 4.5%.

The lower limit of the Si content is preferably 2.8%, more preferably 3.0%, and even more preferably 3.2%.

The upper limit of the Si content is preferably 4.2%, more preferably 4.0%, even more preferably 3.7%, even more preferably 3.6%, and even more preferably 3.5%.

Mn: 0.01 to 1.00%

Manganese (Mn) increases the specific resistance of the steel sheet and reduces the iron loss thereof. Mn further improves the hot workability of the steel sheet and suppresses occurrence of cracking during hot rolling. If the Mn content is less than 0.01%, the above-described effects cannot be sufficiently obtained. On the other hand, if the Mn content exceeds 1.00%, the magnetic flux density of the grain-oriented electrical steel sheet 1 will decrease and the iron loss thereof will also deteriorate.

Therefore, the Mn content is 0.01 to 1.00%.

The lower limit of the Mn content is preferably 0.02%, more preferably 0.03%, and even more preferably 0.05%.

The upper limit of the Mn content is preferably 0.70%, more preferably 0.50%, even more preferably 0.30%, and even more preferably 0.10%.

N: 0 to 0.010%

Nitrogen (N) deteriorates the iron loss of the grain-oriented electrical steel sheet 1 by forming nitrides. If the N content exceeds 0.010%, the iron loss of the grain-oriented electrical steel sheet 1 will deteriorate significantly.

Therefore, the N content is 0.010% or less. Note that the N content may be 0%. In other words, the N content is 0 to 0.010%.

The lower limit of the N content is preferably greater than 0%, more preferably 0.001%, and even more preferably 0.002%.

The upper limit of the N content is preferably 0.009%, more preferably 0.008%, and even more preferably 0.007%.

C: 0 to 0.010%

Carbon (C) is an essential element in steel slabs to improve the magnetic flux density. However, during the production process of the grain-oriented electrical steel sheet 1, C is released from the steel sheet. If the C content in remains more than 0.010% in the grain-oriented electrical steel sheet 1, which is a product, magnetic aging occurs and the iron loss of the grain-oriented electrical steel sheet 1 deteriorates.

Therefore, the C content is 0.010% or less. Note that the C content may be 0%. Therefore, the C content is 0 to 0.010%.

The lower limit of the C content is preferably greater than 0%, more preferably 0.001%, and even more preferably 0.002%.

The upper limit of the C content is preferably 0.009%, more preferably 0.008%, and even more preferably 0.007%.

Sol. Al: 0 to 0.010%

During the production process of the grain-oriented electrical steel sheet 1, acid-soluble aluminum (sol. Al) combines with N to form AlN and functions as an inhibitor. However, if the sol. Al content exceeds 0.010%, Al-based inclusions will remain in the steel sheet. In this case, the iron loss of the grain-oriented electrical steel sheet 1 deteriorates.

Therefore, the sol. Al content is 0.010% or less. Note that the sol. Al content may be 0%. In other words, the sol. Al content is 0 to 0.010%.

The lower limit of the sol. Al content is preferably greater than 0%, more preferably 0.001%, and even more preferably 0.002%.

The upper limit of the sol. Al content is preferably 0.009%, more preferably 0.008%, and even more preferably 0.007%.

Note that in the present specification, sol. Al means acid-soluble Al. Therefore, the sol. Al content is the acid-soluble Al content.

One or more kinds of element selected from a group consisting of S and Se: 0 to 0.010% in total

Sulfur (S) and selenium (Se) combine with Mn during the production process to form fine MnS or MnSe, which are inhibitors. Therefore, S and Se are essential elements in steel slabs. However, during the production process of the grain-oriented electrical steel sheet 1, S and Se are released from the steel sheet. If the total content of one or more kinds of element selected from a group consisting of S and Se in the grain-oriented electrical steel sheet 1 exceeds 0.010%, MnS or MnSe will remain in the steel sheet. In this case, the iron loss of the grain-oriented electrical steel sheet 1 deteriorates.

Accordingly, the total content of one or more kinds of element selected from a group consisting of S and Se is 0.010% or less. Note that the total content of one or more kinds of element selected from a group consisting of S and Se may be 0%. In other words, the total content of one or more kinds of element selected from a group consisting of S and Se is 0 to 0.010%.

The lower limit of the total content of one or more kinds of element selected from a group consisting of S and Se is preferably greater than 0%, more preferably 0.001%, and even more preferably 0.002%.

The upper limit of the total content of one or more kinds of element selected from a group consisting of S and Se is preferably 0.008%, more preferably 0.006%, and even more preferably 0.004%.

Ti: more than 0 to 0.010%

Titanium (Ti) deteriorates the iron loss of the grain-oriented electrical steel sheet 1 by forming nitrides or carbides. If the Ti content exceeds 0.010%, the iron loss of the grain-oriented electrical steel sheet 1 will deteriorate significantly.
Therefore, the Ti content is more than 0 to 0.010%.
The lower limit of the Ti content is preferably 0.001%, and more preferably 0.002%.
The upper limit of the Ti content is preferably 0.009%, more preferably 0.008%, and even more preferably 0.007%.
The remainder of the chemical composition of the base steel sheet 10 of the grain-oriented electrical steel sheet 1 consists of Fe and impurities. Here, impurities mean those that are mixed in from ores as raw materials, scrap, the production environment, or the like while the base steel sheet 10 constituting the grain-oriented electrical steel sheet 1 is industrially manufactured, and that are permitted to the extent that they do not adversely affect the grain-oriented electrical steel sheet 1 of the present embodiment.

[Regarding Optional Elements]

The chemical composition of the base steel sheet 10 of the grain-oriented electrical steel sheet 1 may further contain, instead of a portion of Fe, one or more kinds of elements selected from the group consisting of first and second groups.

[First Group]

One or more kinds of elements selected from a group consisting of:

Ni: 0 to 1.00%,
Cr: 0 to 1.00%,
Cu: 0 to 1.00%,
P: 0 to 0.50%, and
Mo: 0 to 0.10%.

[Second Group]

One or more kinds of elements selected from a group consisting of:

Sn: 0 to 0.50%,
Sb: 0 to 0.50%, and
Bi: 0 to 0.0500%.

The following describes First and Second Groups.

[First Group: Ni, Cr, Cu, P, and Mo]

Ni, Cr, Cu, P, and Mo are optional elements. These elements each change the composition formation behavior in the production process, and improve the magnetic properties of the grain-oriented electrical steel sheet 1.

Ni: 0 to 1.00%

Nickel (Ni) is an optional element and need not be contained. That is, the Ni content may be 0%.
If Ni is contained, that is, if the Ni content is greater than 0%, Ni changes the composition formation behavior until the finishing annealing process to promote secondary recrystallization in the Goss orientation. As a result, the magnetic properties of the grain-oriented electrical steel sheet 1 are improved. If even a small amount of Ni is contained, the above-described effects can be achieved to some extent.
However, if the Ni content exceeds 1.00%, secondary recrystallization may become unstable.
Therefore, the Ni content is 0 to 1.00%, and if contained, is 1.00% or less.
The lower limit of the Ni content is preferably 0.01%, more preferably 0.05%, and even more preferably 0.10%.
The upper limit of the Ni content is preferably 0.90%, more preferably 0.80%, and even more preferably 0.70%.

Cr: 0 to 1.00%

Chromium (Cr) is an optional element and need not be contained. That is, the Cr content may be 0%.

If Cr is contained, that is, if the Cr content is greater than 0%, Cr changes the composition formation behavior until the finishing annealing process to promote secondary recrystallization in the Goss orientation. As a result, the magnetic properties of the grain-oriented electrical steel sheet 1 are improved. If even a small amount of Cr is contained, the above-described effects can be achieved to some extent.

However, if the Cr content exceeds 1.00%, Cr oxides are formed in the steel sheet. Accordingly, the iron loss of the grain-oriented electrical steel sheet 1 deteriorates.

Therefore, the Cr content is 0 to 1.00%, and if contained, is 1.00% or less.

The lower limit of the Cr content is preferably 0.01%, more preferably 0.05%, and even more preferably 0.10%.

The upper limit of the Cr content is preferably 0.90%, more preferably 0.80%, and even more preferably 0.70%.

Cu: 0 to 1.00%

Copper (Cu) is an optional element and need not be contained. That is, the Cu content may be 0%.

If Cu is contained, that is, if the Cu content is greater than 0%, Cu changes the composition formation behavior until the finishing annealing process to promote secondary recrystallization in the Goss orientation. As a result, the magnetic properties of the grain-oriented electrical steel sheet 1 are improved. If even a small amount of Cu is contained, the above-described effects can be achieved to some extent.

However, if the Cu content exceeds 1.00%, the hot workability of the steel sheet is impaired.

Therefore, the Cu content is 0 to 1.00%, and if contained, is 1.00% or less.

The lower limit of the Cu content is preferably 0.01%, more preferably 0.03%, and even more preferably 0.05%.

The upper limit of the Cu content is preferably 0.40%, more preferably 0.30%, even more preferably 0.20%, and even more preferably 0.10%.

P: 0 to 0.50%

Phosphorus (P) is an optional element and need not be contained. That is, the P content may be 0%.

If P is contained, that is, if the P content is greater than 0%, P changes the composition formation behavior until the finishing annealing process to promote secondary recrystallization in the Goss orientation. As a result, the magnetic properties of the grain-oriented electrical steel sheet 1 are improved. If even a small amount of P is contained, the above-described effects can be achieved to some extent.

However, if the P content exceeds 0.50%, the workability of the steel sheet is impaired.

Therefore, the P content is 0 to 0.50%, and if contained, is 0.50% or less.

The lower limit of the P content is preferably 0.01%, more preferably 0.02%, and even more preferably 0.05%.

The upper limit of the P content is preferably 0.40%, more preferably 0.30%, and even more preferably 0.20%.

Mo: 0 to 0.10%

Molybdenum (Mo) is an optional element and need not be contained. That is, the Mo content may be 0%.

If Mo is contained, that is, if the Mo content is greater than 0%, Mo changes the composition formation behavior until the finishing annealing process to promote secondary recrystallization in the Goss orientation. As a result, the magnetic properties of the grain-oriented electrical steel sheet 1 are improved. If even a small amount of Mo is contained, the above-described effects can be achieved to some extent.

However, if the Mo content exceeds 0.10%, the workability of the steel sheet is impaired.

Therefore, the Mo content is 0 to 0.10%, and if contained, is 0.10% or less.

The lower limit of the Mo content is preferably 0.01%, more preferably 0.02%, and even more preferably 0.03%.

The upper limit of the Mo content is preferably 0.09%, more preferably 0.08%, and even more preferably 0.07%.

[Second Group: Sn, Sb, and Bi]

Sn, Sb, and Bi are optional elements. These elements each function as an inhibitor and stabilize secondary recrystallization.

Sn: 0 to 0.50%

Tin (Sn) is an optional element and need not be contained. That is, the Sn content may be 0%.

If Sn is contained, Sn functions as an inhibitor to stabilize secondary recrystallization in the production process of the grain-oriented electrical steel sheet 1. As a result, the magnetic properties of the grain-oriented electrical steel sheet 1 are enhanced. If even a small amount of Sn is contained, the above-described effects can be achieved to some extent.

However, if the Sn content exceeds 0.50%, the magnetic properties of the grain-oriented electrical steel sheet 1 will, on the contrary, be reduced.

Therefore, the Sn content is 0 to 0.50%, and if contained, is 0.50% or less.

The lower limit of the Sn content is preferably 0.01%, more preferably 0.05%, and even more preferably 0.10%.

The upper limit of the Sn content is preferably 0.45%, more preferably 0.40%, and even more preferably 0.35%.

Sb: 0 to 0.50%

Antimony (Sb) is an optional element and need not be contained. That is, the Sb content may be 0%.

If Sb is contained, Sb functions as an inhibitor to stabilize secondary recrystallization in the production process of the grain-oriented electrical steel sheet 1. As a result, the magnetic properties of the grain-oriented electrical steel sheet 1 are enhanced. If even a small amount of Sb is contained, the above-described effects can be achieved to some extent.

However, if the Sb content exceeds 0.50%, the magnetic properties of the grain-oriented electrical steel sheet 1 will, on the contrary, be reduced.

Therefore, the Sb content is 0 to 0.50%, and if contained, is 0.50% or less.

The lower limit of the Sb content is preferably 0.01%, more preferably 0.05%, and even more preferably 0.10%.

The upper limit of the Sb content is preferably 0.45%, more preferably 0.40%, and even more preferably 0.35%.

Bi: 0 to 0.0500%

Bismuth (Bi) is an optional element and need not be contained. That is, the Bi content may be 0%.

If Bi is contained, Bi functions as an inhibitor to stabilize secondary recrystallization in the production process of the grain-oriented electrical steel sheet 1. As a result, the magnetic properties of the grain-oriented electrical steel sheet 1 are improved. If even a small amount of Bi is contained, the above-described effects can be achieved to some extent. However, if the Bi content exceeds 0.0500%, the magnetic properties of the grain-oriented electrical steel sheet 1 will, on the contrary, be reduced.

Therefore, the Bi content is 0 to 0.0500%, and if contained, is 0.0500% or less. The lower limit of the Bi content is preferably 0.0001%, more preferably 0.0005%, even more preferably 0.0010%, and even more preferably 0.0050%.

The upper limit of the Bi content is preferably 0.0400%, more preferably 0.0300%, even more preferably 0.0200%, and even more preferably 0.0100%.

[Method for Measuring Chemical Composition of Grain-Oriented Electrical Steel Sheet 1]

The chemical composition of the grain-oriented electrical steel sheet 1 of the present embodiment can be measured by a well-known component analysis method.

First, if the grain-oriented electrical steel sheet 1 includes the underlayer coating 11 and the secondary coating 12, the following method is used to remove the underlayer coating 11 and the secondary coating 12 from the base steel sheet 10. Specifically, by immersing the grain-oriented electrical steel sheet 1 including the secondary coating 12 in a high-temperature alkaline solution, the secondary coating 12 is removed. The composition of the alkali solution, the temperature thereof, and the immersion time may be adjusted as needed. For example, the grain-oriented electrical steel sheet 1 including the secondary coating 12 is immersed in a sodium hydroxide solution of NaOH in an amount of 30 to 50% by mass + $H_2O$ in an amount of 50 to 70% by mass at 80 to 90°C for 5 to 10 minutes, followed by rinsing and drying. With this process, the secondary coating 12 is removed from the grain-oriented electrical steel sheet 1.

Furthermore, by immersing the grain-oriented electrical steel sheet 1 from which the secondary coating 12 was removed and in which the underlayer coating 11 remains in high-temperature hydrochloric acid, the underlayer coating 11 is removed. The concentration of the hydrochloric acid, the temperature thereof, and the immersion time may be adjusted as needed. For example, the grain-oriented electrical steel sheet 1 from which the secondary coating 12 was removed and in which the underlayer coating 11 remains is immersed in hydrochloric acid in an amount of 30 to 40% by mass at 80 to 90°C for 1 to 5 minutes. After the immersion, the grain-oriented electrical steel sheet 1 is rinsed and dried. With this process, a grain-oriented electrical steel sheet 1 (base steel sheet 10) from which the secondary coating 12 and the underlayer coating 11 were removed is obtained.

The chemical composition of the obtained base steel sheet 10 is measured by a well-known component analysis method compliant with JIS G0321:2017. Specifically, chips are collected from the base steel sheet 10. The collected chips are dissolved in acid to obtain a solution. The solution is subjected to ICP-AES (Inductively Coupled Plasma Atomic Emission Spectrometry) to execute elemental analysis of the chemical composition. The C and S contents are determined by a well-known high-frequency combustion method (combustion-infrared absorption method). The N content is determined by a well-known inert gas melting-thermal conductivity method. For example, the chemical composition of the base steel sheet 10 can be analyzed by using a component analyzer (product name: ICPS-8000) manufactured by Shimadzu Corporation, or the like.

Note that each element content is specified as a numerical value to the least significant figure of each element content specified in the present embodiment and is obtained by rounding off a fraction of a measured numerical value based on the significant figures specified in the present embodiment. For example, the Si content of the present embodiment is specified as a numerical value to the first decimal place. Therefore, the Si content is specified as a numerical value to the first decimal place obtained by rounding off the second decimal place of the measured numerical value.

Similarly, each element content other than the Si content of the grain-oriented electrical steel sheet 1 of the present embodiment is specified as a value obtained by rounding off a fraction of a measured value to the least significant figure specified in the present embodiment.

Note that rounding off means rounding down if the digit to be rounded is less than 5 and rounding up if the digit to be rounded is 5 or more.

[Regarding Underlayer Coating 11]

As described above, the underlayer coating 11 may be a primary coating or an intermediate layer. The primary coating is a well-known coating composed mainly of forsterite ($Mg_2SiO_4$). More specifically, in the primary coating, the forsterite content is 60% by mass or more. The primary coating is formed as a result of the reaction between an annealing separator containing magnesia and an oxide film such as $SiO_2$ on the surface of the base steel sheet 10 or the elements contained in the base steel sheet 10 during the finishing annealing process. Therefore, the underlayer coating 11 has a composition derived from the chemical composition of the annealing separator and the base steel sheet 10. For example, the underlayer coating 11 contains spinel ($MgAl_2O_4$). When placing importance on the reduction of iron loss, the primary coating is used as the underlayer coating 11. On the other hand, the intermediate layer is a coating composed mainly of silica and alumina. When placing importance on punching workability, the intermediate layer is used as the underlayer coating 11.

[Regarding Secondary Coating 12]

The secondary coating 12 is formed on the underlayer coating 11. When a plurality of grain-oriented electrical steel sheets 1 stacked on top of each other are used, the secondary coating 12 ensures insulation between the grain-oriented electrical steel sheets 1 stacked on top of each other. In other words, the secondary coating 12 is an insulating coating. The secondary coating 12 has a well-known configuration. Specifically, the secondary coating 12 contains one or more types of inorganic materials such as a metal chromate salt, a metal phosphate salt, colloidal silica, a Zr compound, and a Ti compound. Preferably, the secondary coating 12 is a coating mainly composed of a phosphate compound. In other words, the secondary coating 12 contains a phosphate compound. When the secondary coating is mainly composed of a phosphate compound, the content of the phosphate compound is 50% by mass or more.

The secondary coating 12 may contain, together with a phosphate compound, one or more types selected from the group consisting of colloidal silica and polytetrafluoroethylene, for example. Examples of the phosphate compound include sodium phosphate, aluminum phosphate, and magnesium phosphate.

[(Feature 2) Regarding KAMave]

Furthermore, in the grain-oriented electrical steel sheet 1 of the present embodiment, when, by measuring crystal orientations at a plurality of measurement points on a surface (rolled surface) of the grain-oriented electrical steel sheet 1 that are arranged in a grid at a pitch of 2 mm in a first direction and in a second direction perpendicular to the first direction using an X-ray diffraction method, with respect to each measurement point, another measurement point that is adjacent to the corresponding measurement point is defined as a first adjacent point, another measurement point that is adjacent to an n-th (n is a natural number) adjacent point is defined as an (n+1)-th adjacent point, and an arithmetic mean value of misorientations of all the adjacent points from the first to fifth adjacent points is defined as a KAM of the corresponding measurement point, an arithmetic mean value KAMave of KAMs of the measurement points is 8.0° or less.

If KAMave is large, the variation of crystal orientations in the steel sheet will be large. In this case, iron loss and magnetostriction increase. On the other hand, if KAMave is less than 8.0°, the variation of crystal orientations in the steel sheet will be sufficiently suppressed. In this case, excellent iron loss and excellent magnetostriction are obtained.

The upper limit of KAMave is preferably 7.9°, more preferably 7.8°, even more preferably 7.7°, even more preferably 7.6°, even more preferably 7.5°.

[Method for Measuring KAMave]

The KAMave can be measured by the following method.

X-ray diffraction by the Laue method is performed on a surface (rolled surface) of the grain-oriented electrical steel sheet 1. Specifically, on the surface of the grain-oriented electrical steel sheet 1, rectangular regions of 250 mm in the first direction and 60 mm in the second direction orthogonal to the first direction are defined as observation regions $AR_n$ (n is a natural number). The first direction and the second direction are not particularly limited. The first direction is, for example, the rolling direction of the grain-oriented electrical steel sheet 1, and the second direction is a direction orthogonal to the rolling direction of the grain-oriented electrical steel sheet 1. The second direction may be the rolling direction, and both the first and second directions may be directions other than the rolling direction.

One or more observation regions $AR_n$ at an arbitrary point is selected from the surface of the grain-oriented electrical steel sheet 1. X-ray diffraction using the Laue method is performed on the observation region $AR_n$ at measurement points (3906 measurement points in total) arranged in a grid at intervals of 2 mm in the first direction and the second direction, and crystal orientations of the measurement points are obtained. The spot diameter at that time is set to 1 mm. The source for X-ray diffraction is a W target, the tube voltage is 40 kV, and the tube current is 40 mA. Based on the crystal orientations obtained at the measurement points, boundaries with misorientation angles of 1 to 180° are defined as grain boundaries. Regions surrounded by the grain boundaries are then defined as crystal grains.

Upon completion of measurement in each observation region $AR_n$, it is determined whether or not the total number of identified crystal grains is 100 or more. When the total number of crystal grains is 100 or more, the later-described KAMs are obtained at all the measurement points in all the observation regions $AR_n$ for which the measurement has been completed.

For example, after the completion of the measurement of crystal orientations in the first observation region $AR_1$, if the number of identified crystal grains is 100 or more, KAMs are obtained at all the measurement points in the observation region $AR_1$.

On the other hand, after the completion of the measurement in the first observation region $AR_1$, if the number of identified crystal grains is less than 100, measurement in the second observation region $AR_2$ is executed. After the completion of the measurement in the observation region $AR_2$, if the total number of identified crystal grains in the observation regions $AR_1$ and $AR_2$ is 100 or more, KAMs are obtained at all the measurement points in the observation regions $AR_1$ and $AR_2$.

In short, the measurement in the observation regions $AR_1$ to $AR_n$ is continued until the total number of identified crystal grains is 100 or more. When the total number of crystal grains reaches 100 or more, KAMs are obtained at all the measurement points in the observation regions $AR_1$ to $AR_n$ for which the measurement has been completed.

KAMs at all the measurement points are obtained by the following method. Misorientation of each measurement point from an adjacent measurement point is analyzed. Specifically, referring to FIG. 7, with respect to each measurement point (denoted by the reference numeral "0" in FIG. 7), other measurement points that are adjacent to the corresponding measurement point are defined as first adjacent points (denoted by the reference numeral "1" in FIG. 7). Other measurement points that are adjacent to the first adjacent points are defined as second adjacent points (denoted by the reference numeral "2" in FIG. 7). Other measurement points that are adjacent to the second adjacent points are defined as third adjacent points (denoted by the reference numeral "3" in FIG. 7). Other measurement points that are adjacent to the third adjacent points are defined as fourth adjacent points (denoted by the reference numeral "4" in FIG. 7). Other measurement points that are adjacent to the fourth adjacent points are defined as fifth adjacent points (denoted by the reference numeral "5" in FIG. 7).

As described above, measurement points that are adjacent to the n-th (n is a natural number) adjacent points are defined as the (n+1)-th adjacent points. The arithmetic mean value of the misorientations of all the adjacent points from the first adjacent points to the fifth adjacent points is then defined as the KAM (Kernel Average Misorientation) of the corresponding measurement point. The arithmetic mean value of the obtained KAMs at the respective measurement points is defined as KAMave. Note that KAMs at the respective measurement points can be obtained, for example, by analyzing the crystal orientations obtained at the measurement points using the product named OIM Analysis manufactured by TSL Solutions Corporation, which is a well-known analysis software.

Note that it is difficult to identify crystal orientations at measurement points corresponding to crystal grains with a grain size of 1 mm or less, or grain boundaries thereof, and the identification may result in failure. Therefore, at such a measurement point (hereinafter referred to as a "defective measurement point"), crystal orientation data of the adjacent measurement point is used instead. Specifically, crystal orientation data of two measurement points (+X and -X) adjacent to a defective measurement point in the first direction and two measurement points (+Y and -Y) adjacent to the defective measurement point in the second direction are used in order of priority of +X, -X, +Y, -Y. First, the crystal orientation data of the +X measurement point is used as the crystal orientation data of the defective measurement point. If the crystal orientation data of the +X measurement point is also defective, the crystal orientation data of the -X measurement point is used. As described above, data that is usable instead of the defective data is determined in order of priority. Note that this method of substituting crystal orientation data is set as the "Clean up" function in the above-described OIM Analysis. The X direction is, e.g., the rolling direction, and the Y direction is, e.g., the width direction.

[(Feature 3) Regarding Magnetic Flux Density $B_8$]

Furthermore, in the grain-oriented electrical steel sheet 1 of the present embodiment, the magnetic flux density $B_8$ is 1.910 T or more. In other words, the grain-oriented electrical steel sheet 1 of the present embodiment can have excellent magnetic flux density. The lower limit of the magnetic flux density $B_8$ is preferably 1.911T, and more preferably 1.912T.

[Regarding Method for Measuring Magnetic Flux Density $B_8$]

The magnetic flux density $B_8$ of the grain-oriented electrical steel sheet 1 is measured by the following method. A test specimen including a central portion of the grain-oriented electrical steel sheet 1 in the sheet width direction is taken from the grain-oriented electrical steel sheet 1. The test specimen has a size of 100 mm × 500 mm × sheet thickness. A single sheet magnetic property test (SST test) is conducted to apply a magnetic field of 800 A/m to the test specimen to obtain the magnetic flux density $B_8$ (T) in accordance with JIS C2556:2015.

[Effects of Grain-Oriented Electrical Steel Sheet 1 of Present Embodiment]

The grain-oriented electrical steel sheet 1 of the present embodiment satisfies Features 1 to 3. Therefore, sufficient magnetic flux density can be obtained. Furthermore, excellent iron loss and excellent magnetostriction can be obtained.

[Method for Producing Grain-Oriented Electrical Steel Sheet 1 of Present Embodiment]

An example of a method for producing a grain-oriented electrical steel sheet of the present embodiment will be described. The method for producing a grain-oriented electrical steel sheet 1 that will be described below is an example for producing the grain-oriented electrical steel sheet 1 of the present embodiment. Accordingly, the grain-oriented electrical steel sheet 1 that has the above-described Features 1 to 3 may also be produced by a production method other than that described below. However, the production method that will be described below is a preferred example of the method for producing the grain-oriented electrical steel sheet 1 of the present embodiment.

[Production Process Flow]

An example of the method for producing the grain-oriented electrical steel sheet 1 of the present embodiment includes following Processes 1 to 6.

(Process 1) Hot rolling process
(Process 2) Hot-rolled sheet annealing process
(Process 3) Cold rolling process
(Process 4) Decarburization annealing process
(Process 5) Finishing annealing process
(Process 6) Secondary coating formation process

Note that the hot-rolled sheet annealing process (Process 2) is an optional process. Accordingly, the hot-rolled sheet annealing process may or may not be performed.
The cold rolling process (Process 3) further includes the following two processes.

(Process 31) Tandem rolling process
(Process 32) Reverse rolling process

In the production method of the present embodiment, the cold rolling process (Process 3) and the decarburization annealing process (Process 4) satisfy the following production conditions.

(Conditions of Tandem Rolling Process (Process 31))

Condition 1: Tandem rolling is performed before reverse rolling.

Condition 2: The average diameter D1 of work rolls is 200 mm or more.

Condition 3: A cumulative rolling reduction ratio CR1 is 30% or more.

Condition 4: Of a plurality of passes of tandem rolling, at least two passes where the rolling shape ratio is 6.00 or more and the nominal rolling reduction strain is 0.40 or more are introduced.

(Conditions of Reverse Rolling Process (Process 32))

Condition 5: An intermediate steel sheet that has not been heat-treated after the tandem rolling process is subject to rolling.

Condition 6: Reverse rolling is performed using a multi-stage rolling mill.

Condition 7: The average diameter D2 of work rolls is 100 mm or less.

Condition 8: A cumulative rolling reduction ratio CR2 is 20% or more.

(Conditions of Decarburization Annealing Process 4)

Condition 9: An average temperature increase rate HR in the temperature range of 450°C to 800°C is 400°C/sec or higher.

The following describes Processes 1 to 6.

[(Process 1) Hot Rolling Process]

In the hot rolling process, hot rolling is performed on a steel slab to produce a hot-rolled steel sheet. Here, the steel slab to be prepared has a chemical composition adjusted such that the chemical composition of the grain-oriented electrical steel sheet 1 satisfies Feature 1.

For example, the chemical composition of the steel slab contains, in mass%, Si: 2.5 to 4.5%, Mn: 0.01 to 0.30%, N: 0.003 to 0.015%, C: 0.010 to 0.100%, sol. Al: 0.010 to 0.050%, one or more kinds of element selected from the group consisting of S and Se: 0.010 to 0.050% in total, Ti: more than 0 to 0.010%, Ni: 0 to 0.50%, Cr: 0 to 0.50%, Cu: 0 to 0.50%, P: 0 to 0.05%, Mo: 0 to 0.05%, Sn: 0 to 0.30%, Sb: 0 to 0.30%, and Bi: 0 to 0.0200%, the remainder being Fe and impurities.

In the present production method, AlN is used as an inhibitor. Therefore, in the chemical composition of the steel slab, the Al content is in the above-described range. When an inhibitor-less method is adopted as the method for producing a grain-oriented electrical steel sheet, the Al content in the steel slab is 0.010% or less.

The steel slab is produced by a well-known steel making process, continuous casting process, or ingot making and billet rolling process. A steel slab with a thickness of 100 mm or less may be produced by a direct casting process.

The hot rolling process using the prepared steel slab includes the following processes.

(Process 11) Heating process

(Process 12) Rough rolling process

(Process 13) Finishing rolling process

The following describes Processes 11 to 13.

[(Process 11) Heating Process]

In the heating process, the steel slab is heated. For example, the steel slab is charged into a well-known heating furnace or a well-known holding furnace, and is heated. The heating temperature for the steel slab is preferably 1100 to 1450°C.

[(Process 12) Rough Rolling Process]

In the rough rolling process, rough rolling is performed on the heated steel slab to produce a rough bar. Here, rough rolling means hot rolling the steel slab using a well-known rough rolling mill. The rough bar means a steel sheet after the completion of the rough rolling process and before the start of the finishing rolling process. In the rough rolling process, the rough rolling mill is used to apply multiple passes of rolling reduction to the steel slab, thereby producing a rough bar.

[(Process 13) Finishing rolling process]

In the finishing rolling process, well-known finishing rolling is performed on the rough bar produced in the rough rolling process to produce a hot-rolled steel sheet. Here, finishing rolling means hot rolling the rough bar using a well-known finishing rolling mill. In the finishing rolling process, a continuous rolling mill constituted by multiple tandem-type rolling stands lined up in a row on the pass line is used to apply multiple passes of rolling reduction to the rough bar, thereby producing a hot-rolled steel sheet.

[(Process 2) Hot-Rolled Sheet Annealing Process]

The hot-rolled sheet annealing process is an optional process. That is, the hot-rolled sheet annealing process may or may not be performed. If performed, in the hot-rolled sheet annealing process, annealing treatment is performed on the hot-rolled steel sheet produced in the hot rolling process. By performing the hot-rolled sheet annealing process, recrystallization is caused in the steel sheet structure, and the magnetic properties are enhanced.

In the hot-rolled sheet annealing process, it is sufficient to perform a well-known hot-rolled sheet annealing process. The method of heating the hot-rolled steel sheet in the hot-rolled sheet annealing is not particularly limited, and it is sufficient to employ a well-known heating method. The hot-rolled sheet annealing temperature is, for example, 800 to 1200°C. The holding time at the hot-rolled sheet annealing temperature is, for example, 10 to 300 seconds. Note that if the hot-rolled sheet annealing process is performed, pickling treatment may be performed on the hot-rolled steel sheet after the hot-rolled sheet annealing process and before the cold-rolling process.

[(Process 3) Cold Rolling Process]

In the cold rolling process, cold rolling is performed on the produced hot-rolled steel sheet to produce a cold-rolled steel sheet. As described above, the cold rolling process includes the following two processes.

　　(Process 31) Tandem rolling process
　　(Process 32) Reverse rolling process

In the cold rolling process, a tandem rolling process is first performed, and then a reverse rolling process is performed. The following describes the tandem rolling process and the reverse rolling process.

[(Process 31) Tandem Rolling Process]

In the tandem rolling process, cold rolling is performed using a tandem rolling mill.

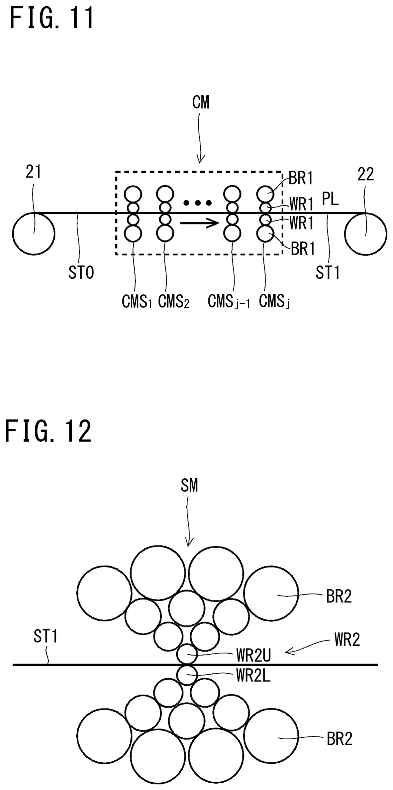

FIG. 11 is a schematic diagram of a tandem rolling mill. Referring to FIG. 11, a tandem rolling mill CM is located between a payoff reel (unwinding device) 21 and a tension reel (winding device) 22 from upstream to downstream.

The payoff reel 21 unwinds a wound hot-rolled steel sheet ST0. The tension reel 22 winds an intermediate steel sheet ST1 produced by the tandem rolling mill CM.

The tandem rolling mill CM performs continuous rolling of multiple passes on the unwound hot-rolled steel sheet ST to produce the intermediate steel sheet ST1.

The tandem rolling mill CM is provided with a plurality of rolling stands $CMS_1$ to $CMS_j$ (j is a natural number greater than or equal to 2) lined up in a row from upstream to downstream. Each rolling stand CMS includes a pair of work rolls WR1 extending horizontally. By coming into contact with the hot-rolled steel sheet to be cold rolled, the pair of work rolls WR1 cold roll the hot-rolled steel sheet. The rolling stand CMS may include a plurality of backup rolls BR1. The backup rolls BR1 support the work rolls WR1 to suppress the deflection of the work rolls WR1 during rolling.

In continuous rolling using the tandem rolling mill CM, subjecting a hot-rolled steel sheet to rolling reduction at each rolling stand CMS when the steel sheet passes through the rolling stand CMS is referred to as "one pass" of rolling reduction. Continuous rolling means multiple passes of rolling reduction using the tandem rolling mill CM. A hot-rolled steel sheet does not need to be subjected to rolling reduction at all the rolling stands CMS of the tandem rolling mill CM. For example, if six rolling stands $CMS_1$ to $CMS_6$ are arranged in the tandem rolling mill CM and a hot-rolled steel sheet is passed through the stand $CMS_6$ without being subjected to rolling reduction, five passes of continuous rolling will be performed.

[(Process 32) Reverse Rolling Process]

FIG. 12 is a schematic diagram of a multi-stage rolling mill that is used in a reverse rolling process. Referring to FIG. 12, in the reverse rolling process, a multi-stage rolling mill SM is used to perform multiple passes of reverse rolling on the intermediate steel sheet ST1 after the tandem rolling process to produce a cold-rolled steel sheet.

The multi-stage rolling mill SM is, for example, a Sendzimir rolling mill. The multi-stage rolling mill SM includes a pair of work rolls WR2 and a plurality of backup rolls BR2. In the multi-stage rolling mill SM, the plurality of backup rolls BR2 support the pair of work rolls WR2 to suppress the deflection of the work rolls WR2 as much as possible. With this, a high rolling reduction can be realized. The pair of work rolls WR2 includes an upper work roll WR2U and a lower work roll WR2L. The lower work roll WR2L is located below the upper work roll WR2U.

Here, subjecting the intermediate steel sheet ST1 to rolling reduction when the intermediate steel sheet ST1 passes through the multi-stage rolling mill SM is referred to as "one pass" of rolling reduction. In the case of reverse rolling, the intermediate steel sheet ST1 is subjected to rolling reduction when the intermediate steel sheet ST1 proceeds from upstream to downstream, and is also subjected to rolling reduction when the intermediate steel sheet ST1 proceeds from downstream to upstream. More specifically, when the intermediate steel sheet ST1 passes through the multi-stage rolling mill SM from upstream to downstream, one pass of rolling reduction is applied to the intermediate steel sheet ST1. Also, when the intermediate steel sheet ST1 passes through the same multi-stage rolling mill SM from downstream to upstream, one pass of rolling reduction is applied to the intermediate steel sheet ST1. In other words, when the intermediate steel sheet ST1 is subjected to rolling reduction in a reciprocating manner, two passes of rolling reduction are applied thereto. In some cases, when the intermediate steel sheet ST1 passes through the multi-stage rolling mill SM, no rolling reduction is applied to the intermediate steel sheet ST1.

In the cold rolling process, the above-described tandem rolling process and reverse rolling process are performed to produce a cold-rolled steel sheet.

[Production Conditions in Cold Rolling Process]

The cold rolling process satisfies Conditions 1 to 8.

(Conditions of Tandem Rolling Process)

Condition 1: Tandem rolling is performed before reverse rolling.
Condition 2: The average diameter D1 of work rolls is 200 mm or more.
Condition 3: The cumulative rolling reduction ratio CR1 is 30% or more.
Condition 4: Of a plurality of passes of tandem rolling, at least two passes where the rolling shape ratio is 6.00 or more and the nominal rolling reduction strain is 0.40 or more are introduced.

(Conditions of Reverse Rolling Process)

Condition 5: An intermediate steel sheet that has not been heat-treated after the tandem rolling process is subject to rolling.
Condition 6: Multiple passes of reverse rolling are performed using the multi-stage rolling mill.
Condition 7: The average diameter D2 of work rolls is 100 mm or less.
Condition 8: The cumulative rolling reduction ratio CR2 is 20% or more.

The following describes Conditions 1 to 8.

[Conditions of Tandem Rolling Process]

[Regarding Condition 1]

In the tandem rolling process, before the reverse rolling process, the above-described tandem rolling mill CM is used to perform continuous rolling of multiple passes to produce the intermediate steel sheet ST1. As described above, in tandem rolling, work rolls with larger diameters can be used to perform rolling reduction, compared to reverse rolling. Therefore, the shear strain applied to the steel sheet can be suppressed compared to reverse rolling. As a result, the sizes of Goss-oriented crystal grains can be suppressed as much as possible in the later-described finishing annealing process 5.

[Regarding Condition 2]

In tandem rolling, the average diameter D1 of a plurality of work rolls used in each pass is 200 mm or more. In the multi-stage rolling mill (Sendzimir mill) used in the later-described reverse rolling process, the average diameter D2 of the work rolls is 100 mm or less in order to suppress deflection of the work rolls, and these work rolls are supported by the plurality of backup rolls. In multi-stage rolling mills, the combination of such a pair of work rolls and a plurality of backup rolls supporting the work rolls achieves high pressure. However, in rolling using a Sendzimir rolling mill, due to work rolls with a small diameter, the shear strain applied to a steel sheet to be rolled is large.

When the shear strain applied is large, $\alpha$-fiber orientations develop in the surface layer of the cold-rolled steel sheet. When the $\alpha$-fiber orientations develop, grain growth until immediately before the development of secondary recrystallization reduces the number of Goss-oriented grains that serve as the core of secondary recrystallization. Therefore, the secondary recrystallized grains become coarse. As a result, the magnetic properties (magnetic flux density and iron loss) of the grain-oriented electrical steel sheet 1 deteriorate.

In the present embodiment, the average diameter D1 of the work rolls in the tandem rolling process is 200 mm or more. In this case, the amount of shear strain applied to the surface layer of the steel sheet during cold rolling can be reduced. Therefore, in cold rolling, $\gamma$-fiber orientations are stabilized compared to the $\alpha$-fiber orientations. As a result, the $\alpha$-fiber orientations are suppressed and the $\gamma$-fiber orientations remain in the surface layer of the cold-rolled steel sheet. The $\gamma$-fiber orientations generate {111}<112> recrystallized grains at the development of primary recrystallization. In the finishing annealing process, {111}<112> recrystallized grains have an orientation relationship corresponding to $\Sigma 9$ with Goss-oriented grains, which has the effect of promoting secondary recrystallization of the Goss-oriented grains in the surface layer. Therefore, the degree of alignment with the Goss orientation after secondary recrystallization can be enhanced. As a result, the magnetic properties of the grain-oriented electrical steel sheet can be increased.

The average diameter D1 is the arithmetic mean value of the diameters (mm) of the pair of work rolls used in each pass.

The lower limit of the average diameter D1 is preferably 250 mm, more preferably 300 mm, even more preferably 325 mm, and even more preferably 350 mm.

The upper limit of the average diameter D1 is preferably 1000 mm, more preferably 900mm, even more preferably 800 mm, even more preferably 700 mm, and even more preferably 650 mm.

[Regarding Condition 3]

The cumulative rolling reduction ratio CR1 in the tandem rolling process is 30% or more. Here, the cumulative rolling reduction ratio CR1 (%) is defined as the following Formula (A).

CR1 = (sheet thickness of hot-rolled steel sheet before tandem rolling process - sheet thickness of intermediate steel sheet after tandem rolling process)/sheet thickness of hot-rolled steel sheet before tandem rolling process $\times$ 100 (A)

If the cumulative rolling reduction ratio CR1 is less than 30%, the rolling reduction in the tandem rolling process is insufficient. In this case, the amount of rolling reduction in the reverse rolling process will be high. Therefore, the amount of shear strain to be applied to the cold-rolled steel sheet will be excessive. Therefore, the degree of alignment with the Goss orientation after secondary recrystallization is decreased. As a result, the magnetic properties of the grain-oriented electrical steel sheet are reduced. Accordingly, the cumulative rolling reduction ratio CR1 is set to 30% or more.

The lower limit of the cumulative rolling reduction ratio CR1 is preferably 35%, more preferably 40%, and even more preferably 45%.

The upper limit of the cumulative rolling reduction ratio CR1 is preferably 90%, more preferably 85%, even more preferably 80%, and even more preferably 75%.

[Regarding Condition 4]

Of a plurality of passes of tandem rolling, at least two specific passes where the rolling shape ratio is 6.00 or more and the nominal rolling reduction strain is 0.40 or more are introduced. As a result, as described above, the distribution of shear strains in the sheet thickness direction is optimized. As a result, KAMave can be kept low.

[Conditions of Reverse Rolling Process]

[Regarding Condition 5]

The target to be rolled in the reverse rolling process is an intermediate steel sheet that has not been heat-treated after the tandem rolling process. In other words, in the reverse rolling process, an intermediate steel sheet, which is a tandem-rolled intermediate material, serves as the target to be rolled. Here, "heat treatment" means the treatment of heating and/or holding a steel sheet at a temperature of 500°C or higher for a predetermined period of time. Heat treatment is, for example, annealing.

When heat treatment such as annealing is performed on the intermediate steel sheet produced by the tandem rolling process, recovery and recrystallization will progress in the intermediate steel sheet. As a result, the total strain introduced by cold rolling decreases. As a result, the magnetic properties of the grain-oriented electrical steel sheet deteriorate. This is because, when heat treatment is performed on the intermediate steel sheet, the strain is reduced as described above, resulting in degradation of the assembly structure of the primary recrystallization in the central layer of the steel sheet. Specifically, the central layer of the steel sheet inherits the $\alpha$-fiber orientations formed in the hot rolling process. Even after the reverse rolling process, the $\alpha$-fiber orientations in the central layer of the steel sheet is significantly developed, compared to in the surface layer of the steel sheet.

If heat treatment such as annealing is performed on the intermediate steel sheet, the recrystallization of the $\alpha$-fiber orientations in the central layer of the steel sheet cannot be promoted even if reverse rolling is performed. When the recrystallization of the $\alpha$-fiber orientations in the central layer of the steel sheet is not sufficiently promoted, the {411}<148> recrystallization orientation in the central layer of the steel sheet decreases. The {411}<148> recrystallization orientation has an orientation relationship corresponding to $\Sigma 9$ with the Goss orientation and promotes secondary recrystallization of the Goss orientation. Therefore, the target to be rolled in the reverse rolling process is an intermediate steel sheet that has not been heat-treated after the tandem rolling process.

[Regarding Condition 6]

In the reverse rolling process, the multi-stage rolling mill SM is used to perform multiple passes of reverse rolling on the intermediate steel sheet ST1 that has not been heat-treated after the tandem rolling process, thereby producing a cold-rolled steel sheet. In reverse rolling using a multi-stage rolling mill SM, a higher rolling reduction can be applied to the steel sheet, compared to in the tandem rolling. Therefore, the cold-rolled steel sheet can be made thinner.

[Regarding Condition 7]

In reverse rolling using the multi-stage rolling mill, the average diameter D2 of a plurality of work rolls used in each pass is 100 mm or less. If the average diameter D2 exceeds 100 mm, a sufficient rolling reduction cannot be applied to the intermediate steel sheet to be reverse rolled. In this case, sufficient shear strain cannot be applied to the intermediate steel plate.

If the average diameter D2 is 100 mm or less, sufficient rolling reduction can be applied to the intermediate steel sheet to be reverse rolled for each pass. As a result, a sufficient amount of shear zone, which serves as the primary recrystallization origin of Goss-oriented grains, can be formed. Therefore, a sufficient number of Goss-oriented grains are generated during the decarburization annealing process.

When the reverse rolling is performed using one multi-stage rolling mill SM, the average diameter D1 is the arithmetic mean value of the diameters (mm) of the pair of work rolls used in each pass. When the reverse rolling is performed using a plurality of multi-stage rolling mills SM, the average diameter D2 is the arithmetic mean value of the diameters (mm) of the pair of work rolls of the multi-stage rolling mills SM used in each pass.

The upper limit of the average diameter D2 is preferably 95 mm, more preferably 90 mm, and even more preferably 85 mm.

The lower limit of the average diameter D2 is not particularly limited. The lower limit of the average diameter D2 is preferably 50 mm, more preferably 55 mm, and even more preferably 60 mm.

[Regarding Condition 8]

The cumulative rolling reduction ratio CR2 in the reverse rolling process is 20% or more. Here, the cumulative rolling reduction ratio CR2 (%) is defined as the following Formula (B).

CR2 = (sheet thickness of cold-rolled steel sheet of sheet thickness of intermediate steel sheet before reverse rolling process - sheet thickness of cold-rolled steel sheet after reverse rolling process)/sheet thickness of intermediate steel sheet before reverse rolling process $\times$ 100 (B)

If the cumulative rolling reduction ratio CR2 is less than 20%, the rolling reduction in the reverse rolling process is insufficient. In this case, the shear zone, which serves as the origin of primary recrystallization of Goss orientation, is insufficient, and no sufficient amount of Goss-oriented grain cores produced by primary recrystallization is generated in the subsequent decarburization annealing process. Therefore, the degree of alignment with the Goss orientation after secondary recrystallization is decreased. As a result, the magnetic properties of the grain-oriented electrical steel sheet are reduced. Therefore, the cumulative rolling reduction ratio CR2 is set to 20% or more.

The lower limit of the cumulative rolling reduction ratio CR2 is preferably 30%, more preferably 35%, and even more preferably 40%.

The upper limit of the cumulative rolling reduction ratio CR2 is preferably 90%, more preferably 80%, even more preferably 75%, and even more preferably 70%.

In the cold rolling process, the tandem rolling process and the reverse rolling process are performed so as to satisfy the above-described Conditions 1 to 8 to produce a cold-rolled steel sheet with a controlled amount of shear strain in the surface layer of the steel sheet. By executing the subsequent process using this cold-rolled steel sheet, the produced grain-oriented electrical steel sheet 1 can satisfy Feature 2.

[(Process 4) Decarburization Annealing Process]

In the decarburization annealing process, decarburization annealing is performed on the cold-rolled steel sheet after the cold rolling process, thereby causing the development of primary recrystallization.

The decarburization annealing process includes the following processes.

(Process 41) Temperature increasing process
(Process 42) Decarburization process
(Process 43) Cooling process

In the temperature increasing process (Process 41), the steel sheet is heated to a suitable temperature (achieving temperature) of 800 to 950°C. In the decarburization process (Process 42), decarburization annealing is performed while holding the steel sheet at the decarburization annealing temperature of 800 to 950°C, thereby causing the development of primary recrystallization. In the cooling process (Process 43), the steel sheet after the decarburization process is cooled by a well-known method. The achieving temperature and the decarburization annealing temperature may be the same temperature, or the achieving temperature may be higher than the decarburization annealing temperature.

In the present embodiment, the average temperature increase rate HR in the temperature range of 400°C to 800°C, which corresponds to the recrystallization temperature range of steel sheets, is significantly higher in the temperature increasing process. With this, secondary recrystallization of the Goss orientation is promoted. Therefore, the degree of alignment with the Goss orientation after the secondary recrystallization can be increased. As a result, the magnetic properties of the grain-oriented electrical steel sheet can be increased.

The following describes the processes.

[(Process 41) Temperature Increasing Process]

In the temperature increasing process, the cold-rolled steel sheet after the cold rolling process is first charged into a heat treatment furnace. In the heat treatment furnace for decarburization annealing in the present embodiment, for example, the temperature of the cold-rolled steel sheet is increased to a suitable temperature between 800°C and 950°C by high-frequency induction heating or current-flowing heating. The temperature increasing process satisfies the following Condition 9.

Condition 9: The average temperature increase rate HR in the temperature range of 450°C to 800°C is 400°C/sec or higher.

[Regarding Condition 9]

In the temperature increasing process, the average temperature increase rate in the temperature range of 450°C to 800°C for the temperature of the cold-rolled steel sheet is defined as the average temperature increase rate HR (°C/sec).

As described above, strain is accumulated in the cold-rolled steel sheet. If the average temperature increase rate HR is less than 400°C/sec, the strain energy, which is the driving force for recrystallization, will be released before recrystallization starts. In this case, a sufficient number of Goss-oriented grains cannot be generated in the cold-rolled steel sheet after primary recrystallization (i.e., cold-rolled steel sheet after the decarburization annealing process).

If the average temperature increase rate HR is 400°C/sec or higher, primary recrystallization will develop with sufficient strain energy accumulated in the cold-rolled steel sheet. Therefore, a sufficient number of Goss-oriented grains can be generated in the cold-rolled steel sheet after primary recrystallization. Accordingly, in the subsequent finishing annealing process, a large number of Goss-oriented grains remain when secondary recrystallization develops. Therefore, the degree of alignment with the Goss orientation after the secondary recrystallization can be increased. As a result, the magnetic properties of the grain-oriented electrical steel sheet can be increased, and variations in magnetic flux density can be suppressed.

Note that the upper limit of the average temperature increase rate HR is not particularly limited. However, if the average temperature increase rate HR is higher than 3000°C/sec, the above effect is saturated. Therefore, the upper limit of the average temperature increase rate HR is 3000°C/sec.

The lower limit of the average temperature increase rate HR is preferably 450°C/sec, more preferably 500°C/sec, more preferably 550°C/sec, more preferably 600°C/sec, more preferably 700°C/sec, more preferably 800°C/sec, more preferably 900°C/sec, more preferably 1000°C/sec, and even more preferably 1100°C/sec.

The average temperature increase rate HR is measured by the following method. A plurality of thermometers are installed in the heat treatment furnace to measure the surface temperature of the steel sheet. The plurality of thermometers are aligned from upstream to downstream of the heat treatment furnace. The average temperature increase rate HR (°C/sec) is determined based on the temperatures of the steel sheet measured by the thermometers and the time taken for the temperature of the steel sheet to increase from 450°C to 800°C.

[(Process 42) Decarburization Process]

In the decarburization process, decarburization annealing is performed while holding the cold-rolled steel sheet after the temperature increasing process at the decarburization annealing temperature. This causes primary recrystallization to develop in the cold-rolled steel sheet. The atmosphere during the decarburization process need only be a well-known atmosphere, and is, for example, a wet nitrogen-hydrogen mixed atmosphere containing hydrogen and nitrogen. By executing decarburization annealing, the carbon in the steel sheet is removed from the steel sheet and primary recrystallization develops. The decarburization annealing temperature and the holding time at the decarburization annealing temperature are not particularly limited. The decarburization annealing temperature is, for example, 800 to 950°C. The holding time at the decarburization annealing temperature is, for example, 15 to 150 seconds.

[(Process 43) Cooling Process]

In the cooling process, the cold-rolled steel sheet after the decarburization process is cooled to room temperature using a well-known method to obtain a decarburized annealed steel sheet. The cooling method may be leaving the steel sheet to cool to room temperature or cooling by water. Preferably, the cold-rolled steel sheet after the decarburization process is left to be cooled. With the above-described processes, a decarburized annealed steel sheet is produced in the decarburization annealing process.

[(Process 5) Finishing Annealing Process]

In the finishing annealing process, an annealing separator is applied to the decarburized annealed steel sheet, and finishing annealing is performed on the decarburized annealed steel sheet to which the annealing separator was applied, thereby producing a finished annealed steel sheet.

The finishing annealing process includes the following processes.

    (Process 51) Annealing separator application process
    (Process 52) Annealing process

The following describes the processes.

[(Process 51) Annealing Separator Application Process]

In the annealing separator application process, an annealing separator is applied to the decarburized annealed steel sheet. Specifically, a water-based slurry containing the annealing separator is applied to the decarburized annealed steel sheet. The water-based slurry is prepared by adding water to the annealing separator and stirring the resultant product.

The annealing separator may be composed mainly of magnesium oxide (MgO), or mainly of silica and alumina. The term "being composed mainly of" means that the corresponding component is 60.0% by mass or more in the annealing separator. The annealing separator may contain, in addition to MgO or silica and alumina, well-known additives.

When placing importance on the reduction of iron loss, the annealing separator composed mainly of MgO is used. When placing importance on punching workability, the annealing separator composed mainly of silica and alumina is used.

In the annealing separator application process, the water-based slurry, which is the annealing separator, is applied to a surface of the decarburized annealed steel sheet. The steel sheet coated with the annealing separator on its surface is wound and coiled. After the steel sheet is coiled, the annealing process is performed.

[(Process 52) Annealing Process]

The annealing process is performed on the steel sheet after the annealing separator application process, thereby causing the development of secondary recrystallization. The finishing annealing process is performed by charging the coiled steel sheet into a heat treatment furnace. The production conditions in the annealing process are, for example, as follows. Note that the atmosphere inside the furnace in the annealing process is a well-known atmosphere.

Finishing annealing temperature: 800 to 1200°C

Holding time at the finishing annealing temperature: 5 to 60 hours.

If the finishing annealing temperature is less than 800°C, sufficient secondary recrystallization will not develop and purification to remove precipitates used for secondary recrystallization will not be sufficient. Therefore, the magnetic properties of the produced grain-oriented electrical steel sheet are reduced. On the other hand, even if the finishing annealing temperature exceeds 1200°C, the effects on the secondary recrystallization and purification will be low, and problems such as deformation of the steel sheet will occur. If the finishing annealing temperature is 800 to 1200°C, sufficient secondary recrystallization will develop and magnetic properties will be enhanced on the assumption that the above-described holding time is appropriate. Furthermore, an underlayer coating is formed on the surface of the steel sheet.

With the above-described production processes, the finished annealed steel sheet is produced in the finishing annealing process.

Note that elements of the chemical composition of the steel sheet are removed from the steel sheet to some extent by the finishing annealing process. In particular, S, Se, Al, N, etc., which function as inhibitors, are significantly removed. In addition, the underlayer coating (primary coating or intermediate layer) is formed on the surface of the grain-oriented electrical steel sheet after the finishing annealing process.

[(Process 6) Secondary Coating Formation Process]

In the secondary coating formation process, a secondary coating (insulating coating) forming agent is applied to the finished annealed steel sheet. Furthermore, heat treatment is performed on the finished annealed steel sheet to which the secondary coating forming agent has been applied. With this, a secondary coating (insulating coating) is formed on the finished annealed steel sheet.

Specifically, a well-known secondary coating forming agent that contains one or more types of inorganic materials such as a metal chromate salt, a metal phosphate salt, colloidal silica, a Zr compound, and a Ti compound is applied to the surface (underlayer coating) of the finished annealed steel sheet. Then, the finished annealed steel sheet to which the secondary coating forming agent was applied is baked. With this, a well-known secondary coating is formed on the underlayer coating.

[Other Optional Processes]

[Nitriding Treatment Process]

In the method for producing the grain-oriented electrical steel sheet 1 according to the present embodiment, a nitriding treatment process may be performed, if necessary, after the decarburization annealing process (Process 4) and before the finishing annealing process (Process 5). The nitriding treatment process may be performed under well-known conditions. The nitriding treatment temperature is, for example, 700 to 850°C. The atmosphere (nitriding treatment atmosphere) in a nitriding treatment furnace is, for example, an atmosphere containing nitriding gases such as hydrogen, nitrogen, and ammonia.

If the nitriding treatment temperature is 700°C or higher, or the nitriding treatment temperature is 850°C or lower, nitrogen can easily penetrate into the steel sheet during the nitriding treatment. If the nitriding treatment is performed within this temperature range, the amount of nitrogen inside the steel sheet can be favorably secured. Therefore, fine AlN is favorably formed in the steel sheet before secondary recrystallization. As a result, secondary recrystallization favorably develops during the finishing annealing process. Note that the time for holding the steel sheet at the nitriding treatment temperature is not particularly limited, but is 10 to 60 seconds, for example.

[Magnetic Domain Refinement Treatment Process]

On the grain-oriented electrical steel sheet according to the present embodiment, a magnetic domain refinement treatment process may further be performed, if necessary, after the finishing annealing process or the secondary coating formation process. In the magnetic domain refinement treatment process, the surface (rolled surface) of the grain-oriented electrical steel sheet is irradiated with laser beams that have a magnetic domain refinement effect to form linear heat-affected zones on the surface of the steel sheet, or to physically form grooves in the surface of the steel sheet. In this case, it is possible to produce a grain-oriented electrical steel sheet with even better magnetic properties.

With the above-described production processes, the grain-oriented electrical steel sheet 1 of the present embodiment is produced.

Hereinafter, aspects of the grain-oriented electrical steel sheet of the present embodiment will be more specifically described with reference to examples. These examples are examples for the purpose of confirming the effects of the method for producing the grain-oriented electrical steel sheet of the present embodiment, and are not intended to limit the grain-oriented electrical steel sheet of the present disclosure.

[EXAMPLE 1]

In Example 1, Conditions 1 to 9 of the above-described production processes were changed, and grain-oriented electrical steel sheets were produced.

Specifically, steel slabs were prepared. The chemical composition of the steel slabs contains, in mass%, Si: 3.3%, Mn: 0.08%, N: 0.008%, C: 0.075%, sol. Al: 0.025%, one or more kinds of element selected from the group consisting of S and Se: 0.022% in total, Ti: 0.001%, Ni: 0.03%, Cr: 0.04%, Cu: 0.08%, P: 0.01%, Mo: 0.01%, Sn: 0.05%, Sb: 0.00%, and Bi: 0.0000%, the remainder being Fe and impurities.

A hot rolling process was performed on the prepared steel slabs. Specifically, the steel slabs were heated to 1340°C in a heating furnace. Hot rolling was performed on the heated steel slabs to produce hot-rolled steel sheets with a thickness of 2.3 mm.

The hot-rolled steel sheets after the hot rolling process were subjected to a hot-rolled sheet annealing process at the hot-rolled sheet annealing temperature from 800 to 1200°C with a holding time from 10 to 300 seconds. After the hot-rolled sheet annealing process, a cold rolling process was performed to produce cold-rolled steel sheets with a thickness of 0.22 mm. Specifically, a first cold rolling process as shown in Table 1 was performed, and then a second cold rolling process was performed. Conditions 1 to 8 were as shown in Table 1.

[Table 1]

TABLE 1

| Test number | Cold rolling process | | | | | | | | | Decarburization annealing process |
| | First cold rolling process | | | | Second cold rolling process | | | | |
| | Condition 1 | Condition 2 | Condition 3 | Condition 4 | Condition 5 | Condition 6 | Condition 7 | Condition 8 | Condition 9 |
| | Rolling method | Work roll diameter D1 (mm) | Rolling reduction ratio CR1 (%) | Specific pass count | Heat treatment | Rolling method | Work roll diameter D2 (mm) | Rolling reduction ratio CR2 (%) | Temperature increase rate HR (°C/sec) |
|---|---|---|---|---|---|---|---|---|---|
| 1 | Tandem | 200 | 31 | 2 | No | Reverse | 100 | 86 | 400 |
| 2 | Tandem | 200 | 45 | 2 | No | Reverse | 90 | 83 | 400 |
| 3 | Tandem | 200 | 69 | 2 | No | Reverse | 90 | 69 | 400 |
| 4 | Tandem | 200 | 32 | 3 | No | Reverse | 70 | 86 | 400 |
| 5 | Tandem | 200 | 49 | 3 | No | Reverse | 80 | 81 | 400 |
| 6 | Tandem | 200 | 72 | 3 | No | Reverse | 70 | 66 | 400 |
| 7 | Tandem | 200 | 32 | 2 | No | Reverse | 80 | 86 | 400 |
| 8 | Tandem | 200 | 54 | 2 | No | Reverse | 80 | 79 | 400 |
| 9 | Tandem | 200 | 76 | 2 | No | Reverse | 90 | 60 | 400 |
| 10 | Tandem | 400 | 43 | 3 | No | Reverse | 100 | 83 | 400 |
| 11 | Tandem | 400 | 62 | 3 | No | Reverse | 100 | 75 | 400 |
| 12 | Tandem | 400 | 78 | 3 | No | Reverse | 90 | 57 | 400 |
| 13 | Tandem | 400 | 35 | 2 | No | Reverse | 90 | 85 | 400 |
| 14 | Tandem | 400 | 62 | 2 | No | Reverse | 80 | 75 | 400 |
| 15 | Tandem | 400 | 79 | 2 | No | Reverse | 80 | 54 | 400 |
| 16 | Tandem | 400 | 35 | 4 | No | Reverse | 60 | 85 | 400 |
| 17 | Tandem | 400 | 65 | 4 | No | Reverse | 80 | 73 | 400 |
| 18 | Tandem | 400 | 84 | 3 | No | Reverse | 90 | 40 | 400 |
| 19 | Tandem | 600 | 38 | 2 | No | Reverse | 100 | 85 | 400 |
| 20 | Tandem | 600 | 42 | 3 | No | Reverse | 100 | 84 | 400 |

(continued)

| Test number | Cold rolling process | | | | | | | | Decarburization annealing process |
| | First cold rolling process | | | | Second cold rolling process | | | | |
| | Condition 1 | Condition 2 | Condition 3 | Condition 4 | Condition 5 | Condition 6 | Condition 7 | Condition 8 | Condition 9 |
| | Rolling method | Work roll diameter D1 (mm) | Rolling reduction ratio CR1 (%) | Specific pass count | Heat treatment | Rolling method | Work roll diameter D2 (mm) | Rolling reduction ratio CR2 (%) | Temperature increase rate HR (°C/sec) |
|---|---|---|---|---|---|---|---|---|---|
| 21 | Tandem | 600 | 76 | 3 | No | Reverse | 100 | 60 | 400 |
| 22 | Tandem | 600 | 33 | 3 | No | Reverse | 80 | 86 | 400 |
| 23 | Tandem | 600 | 48 | 3 | No | Reverse | 80 | 82 | 400 |
| 24 | Tandem | 600 | 68 | 3 | No | Reverse | 70 | 70 | 400 |
| 25 | Tandem | 600 | 34 | 3 | No | Reverse | 80 | 86 | 400 |
| 26 | Tandem | 600 | 52 | 3 | No | Reverse | 70 | 80 | 400 |
| 27 | Tandem | 600 | 77 | 3 | No | Reverse | 80 | 58 | 400 |
| 28 | Tandem | 400 | 64 | 3 | No | Reverse | 80 | 73 | 800 |
| 29 | Tandem | 400 | 64 | 3 | No | Reverse | 90 | 73 | 1300 |
| 30 | Tandem | 400 | 64 | 3 | No | Reverse | 70 | 73 | 1800 |
| 31 | Tandem | 400 | 64 | 3 | No | Reverse | 80 | 73 | 2800 |
| 32 | Tandem | 200 | 32 | 1 | No | Reverse | 70 | 86 | 400 |
| 33 | Tandem | 200 | 41 | 1 | No | Reverse | 70 | 84 | 400 |
| 34 | Tandem | 400 | 64 | 0 | No | Reverse | 80 | 73 | 400 |
| 35 | Tandem | 400 | 62 | 1 | No | Reverse | 90 | 75 | 1000 |
| 36 | Tandem | 600 | 64 | 1 | No | Reverse | 90 | 73 | 1000 |
| 37 | Tandem | 600 | 35 | 0 | No | Reverse | 80 | 85 | 1000 |
| 38 | Tandem | 150 | 74 | 2 | No | Reverse | 70 | 63 | 400 |
| 39 | Tandem | 400 | 21 | 2 | No | Reverse | 80 | 88 | 400 |
| 40 | Tandem | 400 | 62 | 2 | No | Reverse | 130 | 75 | 400 |
| 41 | Tandem | 400 | 89 | 2 | No | Reverse | 90 | 13 | 400 |
| 42 | Tandem | 400 | 63 | 2 | Yes | Reverse | 80 | 74 | 400 |

(continued)

| Test number | Cold rolling process | | | | | | | | Decarburization annealing process |
| | First cold rolling process | | | | Second cold rolling process | | | | |
| | Condition 1 | Condition 2 | Condition 3 | Condition 4 | Condition 5 | Condition 6 | Condition 7 | Condition 8 | Condition 9 |
| | Rolling method | Work roll diameter D1 (mm) | Rolling reduction ratio CR1 (%) | Specific pass count | Heat treatment | Rolling method | Work roll diameter D2 (mm) | Rolling reduction ratio CR2 (%) | Temperature increase rate HR (°C/sec) |
|---|---|---|---|---|---|---|---|---|---|
| 43 | Reverse | 400 | 90 | 2 | - | - | - | - | 400 |
| 44 | Tandem | 400 | 54 | 2 | No | Reverse | 80 | 79 | 20 |
| 45 | Tandem | 400 | 66 | 2 | No | Reverse | 80 | 72 | 100 |
| 46 | Tandem | 400 | 52 | 2 | No | Reverse | 80 | 80 | 300 |

Specifically, "Tandem" in the column "Condition 1, Rolling method" of the column "First cold rolling process" in Table 1 means that a tandem rolling process was performed as the first cold rolling process. "Reverse" means that a reverse rolling process was performed as the first cold rolling process.

In the column "Condition 2, Work roll diameter D1 (mm)" of the column "First cold rolling process" in Table 1, the average diameters D1 (mm) of the work rolls used in each pass are listed. In the column "Condition 3, Rolling reduction ratio CR1 (%)" of the column "First cold rolling process" in Table 1, the cumulative rolling reduction ratios CR1 (%) in the first cold rolling process are listed.

The column "Condition 4, Specific pass count" in the column "First cold rolling process" in Table 1 indicates the number of specific passes where the rolling shape ratio is 6.00 or more and the nominal rolling reduction strain is 0.40 or more.

The column "Condition 5, Heat treatment" in the column "Second cold rolling process" in Table 1 indicates whether or not the cold-rolled steel sheet to be rolled has been heat treated. "No" means that the cold-rolled steel sheet that was an as-rolled material and had not been annealed was subjected to the second cold rolling process. "Yes" means that the annealed cold-rolled steel sheet was subjected to the second cold rolling process. Note that in the annealing process, the cold-rolled steel sheet was held at 1100°C for 80 seconds.

"Reverse" in the column "Condition 6, Rolling method" of the column "Second cold rolling process" in Table 1 means that a reverse rolling process was performed as the second cold rolling process. "-" means that no second cold rolling process was performed.

In the column "Condition 7, Work roll diameter D2 (mm)" of the column "Second cold rolling process" in Table 1, the average diameters D2 (mm) of the work rolls used in each pass are listed. In the column "Condition 8, Rolling reduction ratio CR2 (%)" of the column "Second cold rolling process" in Table 1, the cumulative rolling reduction ratios CR2 (%) in the second cold rolling process are listed.

A decarburization annealing process was performed on the cold-rolled steel sheets after the cold rolling process. Specifically, the temperatures of the cold-rolled steel sheets were increased to the achieving temperature of 870°C, and then the cold-rolled steel sheets were held at the decarburization annealing temperature of 830°C for 80 seconds. Then, the cold-rolled steel sheets were left to be cooled to room temperature, and decarburized annealed steel sheets were obtained. Note that at the time of temperature increase, the average temperature increase rate HR when the temperature is increased from 450°C to 800°C was as described in the column "Condition 9, Temperature increase rate HR (°C/sec)" of "Decarburization annealing process" in Table 1.

An annealing separator composed mainly of MgO was applied to the surfaces of the decarburized annealed steel sheets. Then, the decarburized annealed steel sheets to which the annealing separator was applied were wound and coiled.

Finishing annealing was performed on the coils and finished annealed steel sheets were produced. The finishing annealing temperature was 1100°C to 1200°C, and the holding time at the finishing annealing temperature was 5 to 30 hours.

A secondary coating formation process was performed on the steel sheets after the finishing annealing process. Specifically, a secondary coating forming agent composed mainly of colloidal silica and phosphate was applied to the surface of the finished annealed steel sheet of each test number. Then, the finished annealed steel sheets to which the secondary coating forming agent was applied were baked under the same conditions, whereby secondary coatings were formed on the primary coatings. With the above-described production processes, the grain-oriented electrical steel sheets of the test numbers were produced.

The chemical compositions of the grain-oriented electrical steel sheets of the test numbers were measured based on the above-described [Method for Measuring Chemical Composition of Grain-Oriented Electrical Steel Sheet 1]. As a result, the chemical compositions of the grain-oriented electrical steel sheets of the test numbers were chemical compositions containing, Si: 3.3%, Mn: 0.08%, N: less than 0.002%, C: 0.002%, sol. Al: less than 0.001%, S: less than 0.001%, and Ti: 0.001%, the remainder consisting of Fe and impurities.

[Evaluation Test]

The following evaluation tests were conducted on the produced grain-oriented electrical steel sheets.

(Test 1) KAMave measurement test
(Test 2) Magnetic flux density measurement test
(Test 3) Iron loss evaluation test
(Test 4) Magnetostriction evaluation test

The following describes Tests 1 to 4.

[(Test 1) KAMave measurement test]

KAMave of the grain-oriented electrical steel sheets of the test numbers was obtained using the above-described [Method for Measuring KAMave]. The obtained values of KAMave are shown in "KAMave (°)" in Table 2.

[Table 2]

TABLE 2

| Test number | Evaluation result | | | | | | | | Remarks |
|---|---|---|---|---|---|---|---|---|---|
| | KAMave (°) | Magnetic flux density $B_8$ (T) | Iron loss $W_{17/50}$ (W/kg) | $W_{ref1}$ | $W_{17/50} \leq W_{ref1}$ | Magnetostriction $\lambda$p-p@1.9T ($\times 10^{-6}$) | $W_{ref2}$ | $\lambda$p-p@1.9T$\leq W_{ref2}$ | |
| 1 | 7.9 | 1.911 | 0.845 | 0.873 | T | 0.49 | 0.55 | T | Inventive example |
| 2 | 7.5 | 1.916 | 0.832 | 0.860 | T | 0.45 | 0.52 | T | Inventive example |
| 3 | 7.5 | 1.923 | 0.821 | 0.843 | T | 0.42 | 0.48 | T | Inventive example |
| 4 | 8.0 | 1.910 | 0.839 | 0.875 | T | 0.48 | 0.55 | T | Inventive example |
| 5 | 7.6 | 1.914 | 0.843 | 0.865 | T | 0.42 | 0.53 | T | Inventive example |
| 6 | 7.5 | 1.919 | 0.835 | 0.853 | T | 0.44 | 0.50 | T | Inventive example |
| 7 | 7.8 | 1.912 | 0.841 | 0.870 | T | 0.41 | 0.54 | T | Inventive example |
| 8 | 7.8 | 1.918 | 0.831 | 0.855 | T | 0.42 | 0.51 | T | Inventive example |
| 9 | 7.6 | 1.923 | 0.802 | 0.843 | T | 0.33 | 0.48 | T | Inventive example |
| 10 | 7.8 | 1.913 | 0.838 | 0.868 | T | 0.46 | 0.54 | T | Inventive example |
| 11 | 7.7 | 1.918 | 0.829 | 0.855 | T | 0.37 | 0.51 | T | Inventive example |
| 12 | 7.8 | 1.925 | 0.807 | 0.838 | T | 0.42 | 0.48 | T | Inventive example |
| 13 | 7.9 | 1.912 | 0.848 | 0.870 | T | 0.45 | 0.54 | T | Inventive example |
| 14 | 7.3 | 1.924 | 0.795 | 0.840 | T | 0.39 | 0.48 | T | Inventive example |
| 15 | 7.8 | 1.919 | 0.810 | 0.853 | T | 0.39 | 0.50 | T | Inventive example |
| 16 | 7.9 | 1.913 | 0.841 | 0.868 | T | 0.41 | 0.54 | T | Inventive example |
| 17 | 7.8 | 1.915 | 0.834 | 0.863 | T | 0.48 | 0.53 | T | Inventive example |
| 18 | 7.6 | 1.922 | 0.811 | 0.845 | T | 0.38 | 0.49 | T | Inventive example |
| 19 | 7.9 | 1.911 | 0.844 | 0.873 | T | 0.42 | 0.55 | T | Inventive example |
| 20 | 7.9 | 1.918 | 0.824 | 0.855 | T | 0.37 | 0.51 | T | Inventive example |
| 21 | 7.6 | 1.923 | 0.811 | 0.843 | T | 0.44 | 0.48 | T | Inventive example |
| 22 | 7.6 | 1.912 | 0.848 | 0.870 | T | 0.41 | 0.54 | T | Inventive example |

(continued)

| Test number | Evaluation result | | | | | | | | | Remarks |
|---|---|---|---|---|---|---|---|---|---|---|
| | KAMave (°) | Magnetic flux density $B_8$ (T) | Iron loss $W_{17/50}$ (W/kg) | $W_{ref1}$ | $W_{17/50} \leq W_{ref1}$ | Magnetostriction $\lambda$p-p@1.9T ($\times 10^{-6}$) | $W_{ref2}$ | $\lambda$p-p@1.9T$\leq W_{ref2}$ | | Remarks |
| 23 | 7.5 | 1.925 | 0.798 | 0.838 | T | 0.34 | 0.48 | T | | Inventive example |
| 24 | 7.4 | 1.924 | 0.813 | 0.840 | T | 0.32 | 0.48 | T | | Inventive example |
| 25 | 7.8 | 1.910 | 0.844 | 0.875 | T | 0.48 | 0.55 | T | | Inventive example |
| 26 | 7.5 | 1.924 | 0.798 | 0.840 | T | 0.36 | 0.48 | T | | Inventive example |
| 27 | 7.5 | 1.922 | 0.811 | 0.845 | T | 0.35 | 0.49 | T | | Inventive example |
| 28 | 7.5 | 1.923 | 0.804 | 0.843 | T | 0.33 | 0.48 | T | | Inventive example |
| 29 | 7.2 | 1.925 | 0.795 | 0.838 | T | 0.38 | 0.48 | T | | Inventive example |
| 30 | 7.2 | 1.926 | 0.788 | 0.835 | T | 0.34 | 0.47 | T | | Inventive example |
| 31 | 7.2 | 1.928 | 0.786 | 0.830 | T | 0.36 | 0.46 | T | | Inventive example |
| 32 | 9.4 | 1.911 | 0.876 | 0.873 | F | 0.59 | 0.55 | F | | Comparative example |
| 33 | 9.0 | 1.914 | 0.882 | 0.865 | F | 0.55 | 0.53 | F | | Comparative example |
| 34 | 8.8 | 1.919 | 0.879 | 0.853 | F | 0.61 | 0.50 | F | | Comparative example |
| 35 | 8.7 | 1.923 | 0.854 | 0.843 | F | 0.53 | 0.48 | F | | Comparative example |
| 36 | 8.5 | 1.929 | 0.841 | '0.828 | F | 0.49 | 0.46 | F | | Comparative example |
| 37 | 9.0 | 1.912 | 0.893 | 0.870 | F | 0.66 | 0.54 | F | | Comparative example |
| 38 | 8.8 | 1.902 | 0.911 | 0.895 | F | 0.61 | 0.59 | F | | Comparative example |
| 39 | 8.6 | 1.901 | 0.899 | 0.898 | F | 0.61 | 0.59 | F | | Comparative example |
| 40 | 8.4 | 1.908 | 0.892 | 0.880 | F | 0.57 | 0.56 | F | | Comparative example |
| 41 | 8.7 | 1.904 | 0.893 | 0.890 | F | 0.62 | 0.58 | F | | Comparative example |
| 42 | 8.2 | 1.906 | 0.886 | 0.885 | F | 0.58 | 0.57 | F | | Comparative example |
| 43 | 8.8 | 1.907 | 0.890 | 0.883 | F | 0.58 | 0.57 | F | | Comparative example |
| 44 | 8.8 | 1.871 | 0.974 | 0.973 | F | 0.82 | 0.74 | F | | Comparative example |
| 45 | 9.1 | 1.884 | 0.942 | 0.940 | F | 0.72 | 0.68 | F | | Comparative example |
| 46 | 9.3 | 1.893 | 0.938 | 0.918 | F | 0.74 | 0.64 | F | | Comparative example |

[(Test 2) Magnetic Flux Density Measurement Test]

A test specimen was taken from the produced grain-oriented electrical steel sheet of each test number. The size of the test specimens was 100 mm $\times$ 500 mm $\times$ sheet thickness. The test specimen included a central portion of the grain-oriented electrical steel sheet in the sheet width direction. A single-sheet magnetic property test (SST test) was conducted to apply a magnetic field of 800 A/m to the test specimen and obtain the magnetic flux density $B_8$ (T), in accordance with JIS C2556:2015. The obtained magnetic flux densities $B_8$ are shown in "Magnetic flux density $B_8$ (T)" in Table 2.

[(Test 3) Iron Loss Evaluation Test]

A test specimen was taken from the produced grain-oriented electrical steel sheet of each test number. The size of the test specimens was 100 mm $\times$ 500 mm $\times$ sheet thickness. The test specimen included a central portion of the grain-oriented electrical steel sheet in the sheet width direction. Using the test specimens, the iron losses $W_{17/50}$ (W/kg) when the frequency was 50 Hz and the maximum flux density was 1.7 T were obtained in accordance with JIS C2556:2015. The obtained iron losses $W_{17/50}$ are shown in "Iron loss $W_{17/50}$ (W/kg)" in Table 2. If the iron loss $W_{17/50}$ was less than a threshold value $W_{ref1}$ = -2.500 $\times$ $B_8$ + 5.650, it was determined that excellent iron loss characteristics were obtained in the grain-oriented electrical steel sheet. The column "$W_{ref1}$" in Table 2 indicates the threshold value $W_{ref1}$ for each test number. When the column "$W_{17/50} \leq W_{ref1}$" indicates "T", it means that the iron loss $W_{17/50}$ was the threshold $W_{ref1}$ or less, and when the column indicates "F", it means that the iron loss $W_{17/50}$ exceeds the threshold $W_{ref1}$.

[(Test 4) Magnetostriction Evaluation Test]

The magnetostriction $\lambda$p-p@1.9T of the grain-oriented electrical steel sheet of each test number was measured by the following method. Specifically, a strip-shaped test specimen was taken from the grain-oriented electrical steel sheet. The size of the strip-shaped test specimen was 100 mm $\times$ 500 mm $\times$ sheet thickness, and the longitudinal direction of the strip-shaped test specimen corresponded to the rolling direction of the grain-oriented electrical steel sheet.
The strip-shaped test specimen was inserted into an excitation frame and was excited to 1.9 T with an alternating current. The magnetostrictive deformation at that time was measured using a non-contact optical measurement device of a laser Doppler system. The measured waveforms of the magnetostrictive deformation were stored in a transient memory. Separately, the magnetostriction $\lambda$p-p@1.9T was obtained from the maximum and minimum values of the amount of magnetostrictive deformation within one cycle of the excitation waveform of the strip-shaped test specimen measured with a search coil. Here, the expression "within one cycle of the excitation waveform" means one cycle of excitation at commercial frequency, such as a cycle of 0T, 1.9T, 0T, 1.9T. The obtained values of magnetostriction $\lambda$p-p@1.9T are shown in "Magnetostriction $\lambda$p-p@1.9T ($\times10^{-6}$)" in Table 2. If the magnetostriction $\lambda$p-p@1.9T is -5.000 x $B_8$ + 10.100 or less, it was determined that the magnetostriction characteristics were sufficiently low in the grain-oriented electrical steel sheet. The column "$W_{ref2}$" in Table 2 indicates a threshold value $W_{ref2}$ for each test number. When the column "$\lambda$p-p@1.9T $\leq W_{ref2}$" indicates "T", it means that the magnetostriction $\lambda$p-p@1.9T is the threshold value $W_{ref2}$ or less. When the column "$\lambda$p-p@1.9T $\leq W_{ref2}$" indicates "F", it means that the magnetostriction $\lambda$p-p@1.9T exceeds the threshold value $W_{ref2}$.

[Evaluation Result]

Referring to Tables 1 and 2, the grain-oriented electrical steel sheets of the test numbers 1 to 31 satisfy Features 1 to 3. Therefore, the magnetic flux densities $B_8$ were 1.910 T or more, and furthermore, the iron losses $W_{17/50}$ were the threshold value $W_{ref1}$ or less, indicating excellent iron loss characteristics. Furthermore, the magnetostriction $\lambda$p-p@1.9T was the threshold value $W_{ref2}$ or less, indicating sufficiently low magnetostriction.
On the other hand, the grain-oriented electrical steel sheets of the test numbers 32 to 37 do not satisfy Condition 4 in the production processes. In other words, the number of specific passes in the tandem rolling was less than two. Therefore, the KAMave exceeded 8.0°. Accordingly, the iron losses $W_{17/50}$ exceeded the threshold value $W_{ref1}$, indicating high iron losses. Furthermore, the values of magnetostriction $\lambda$p-p@1.9T exceeded the threshold value $W_{ref2}$, indicating high magnetostriction.
The grain-oriented electrical steel sheet of the test number 38 does not satisfy Condition 2 in the production processes. Therefore, no sufficient magnetic flux density was obtained. Furthermore, the KAMave exceeded 8.0°. Therefore, the iron loss $W_{17/50}$ exceeded the threshold value $W_{ref1}$, indicating high iron loss. Furthermore, the magnetostriction $\lambda$p-p@1.9T exceeded the threshold value $W_{ref2}$, indicating high magnetostriction.
The grain-oriented electrical steel sheet of the test number 39 does not satisfy Condition 3 in the production processes. Therefore, no sufficient magnetic flux density was obtained. Furthermore, the KAMave exceeded 8.0°. Therefore, the iron loss $W_{17/50}$ exceeded the threshold value $W_{ref1}$, indicating high iron loss. Furthermore, the magnetostriction $\lambda$p-p@1.9T exceeded the threshold value $W_{ref2}$, indicating high magnetostriction.

The grain-oriented electrical steel sheet of the test number 40 does not satisfy Condition 7 in the production processes. Therefore, no sufficient magnetic flux density was obtained. Furthermore, the KAMave exceeded 8.0°. Therefore, the iron loss $W_{17/50}$ exceeded the threshold value $W_{ref1}$, indicating high iron loss. Furthermore, the magnetostriction $\lambda$p-p@1.9T exceeded the threshold value $W_{ref2}$, indicating high magnetostriction.

The grain-oriented electrical steel sheet of the test number 41 does not satisfy Condition 8 in the production processes. Therefore, no sufficient magnetic flux density was obtained. Furthermore, the KAMave exceeded 8.0°. Therefore, the iron loss $W_{17/50}$ exceeded the threshold value $W_{ref1}$, indicating high iron loss. Furthermore, the magnetostriction $\lambda$p-p@1.9T exceeded the threshold value $W_{ref2}$, indicating high magnetostriction.

The grain-oriented electrical steel sheet of the test number 42 does not satisfy Condition 5 in the production processes. Therefore, no sufficient magnetic flux density was obtained. Furthermore, the KAMave exceeded 8.0°. Therefore, the iron loss $W_{17/50}$ exceeded the threshold value $W_{ref1}$, indicating high iron loss. Furthermore, the magnetostriction $\lambda$p-p@1.9T exceeded the threshold value $W_{ref2}$, indicating high magnetostriction.

In the grain-oriented electrical steel sheet of the test number 43, only a reverse rolling process was performed in the cold rolling process. Therefore, no sufficient magnetic flux density was obtained. Furthermore, the KAMave exceeded 8.0°. Therefore, the iron loss $W_{17/50}$ exceeded the threshold value $W_{ref1}$, indicating high iron loss. Furthermore, the magnetostriction $\lambda$p-p@1.9T exceeded the threshold value $W_{ref2}$, indicating high magnetostriction.

The grain-oriented electrical steel sheets of the test numbers 44 to 46 do not satisfy Condition 9 in the production processes. Therefore, no sufficient magnetic flux density was obtained. Furthermore, the KAMave exceeded 8.0°. Therefore, the iron losses $W_{17/50}$ exceeded the threshold value $W_{ref1}$, indicating high iron losses. Furthermore, the values of magnetostriction $\lambda$p-p@1.9T exceeded the threshold value $W_{ref2}$, indicating high magnetostriction.

[EXAMPLE 2]

In Example 2, grain-oriented electrical steel sheets having chemical compositions shown in Tables 3 (Tables 3A and 3B) were produced.

[Table 3A]

TABLE 3A

| Test number | Chemical composition of grain-oriented electrical steel sheet (unit: mass%, the remainder being Fe and impurities) | | | | | | | |
|---|---|---|---|---|---|---|---|---|
| | Si | Mn | N | C | Sol. Al | S | Se | Ti |
| 1 | 2.9 | 0.07 | <0.002 | 0.002 | <0.001 | <0.001 | <0.001 | 0.002 |
| 2 | 3.4 | 0.07 | <0.002 | 0.002 | <0.001 | <0.001 | <0.001 | 0.003 |
| 3 | 3.3 | 0.07 | <0.002 | 0.001 | <0.001 | <0.001 | <0.001 | 0.001 |
| 4 | 3.3 | 0.06 | <0.002 | 0.002 | <0.001 | <0.001 | <0.001 | 0.001 |
| 5 | 3.1 | 0.07 | <0.002 | 0.001 | <0.001 | <0.001 | <0.001 | 0.002 |
| 6 | 3.2 | 0.07 | <0.002 | 0.002 | <0.001 | <0.001 | <0.001 | 0.002 |
| 7 | 3.3 | 0.06 | <0.002 | 0.002 | <0.001 | <0.001 | <0.001 | 0.002 |
| 8 | 3.3 | 0.06 | <0.002 | 0.001 | <0.001 | <0.001 | <0.001 | 0.004 |
| 9 | 3.4 | 0.08 | <0.002 | 0.002 | <0.001 | <0.001 | <0.001 | 0.001 |
| 10 | 3.2 | 0.09 | <0.002 | 0.002 | <0.001 | <0.001 | <0.001 | 0.002 |
| 11 | 2.8 | 0.08 | <0.002 | 0.002 | <0.001 | <0.001 | <0.001 | 0.002 |
| 12 | 3.1 | 0.06 | <0.002 | 0.002 | <0.001 | <0.001 | <0.001 | 0.003 |

[Table 3B]

TABLE 3B

| Test number | Chemical composition of grain-oriented electrical steel sheet (unit: mass%, the remainder being Fe and impurities) | | | | | | | |
|---|---|---|---|---|---|---|---|---|
| | Ni | Cr | Cu | P | Mo | Sn | Sb | Bi |
| 1 | 0.01 | - | - | - | - | - | - | - |
| 2 | - | - | - | - | - | 0.10 | 0.02 | 0.0001 |
| 3 | 0.02 | 0.06 | 0.01 | - | 0.04 | 0.07 | - | 0.0001 |
| 4 | - | - | 0.03 | - | - | - | 0.06 | - |
| 5 | - | 0.01 | 0.01 | 0.04 | - | 0.04 | 0.02 | - |
| 6 | - | - | 0.02 | - | 0.02 | 0.02 | - | - |
| 7 | - | - | - | - | - | 0.14 | - | - |
| 8 | - | - | 0.07 | 0.01 | 0.01 | - | - | - |
| 9 | - | 0.02 | 0.05 | - | - | - | - | - |
| 10 | - | - | - | - | - | 0.08 | - | 0.0001 |
| 11 | 0.06 | 0.04 | - | - | - | - | 0.02 | - |
| 12 | - | - | - | - | - | - | - | - |

Specifically, a plurality of steel slabs having different chemical compositions were prepared. The chemical compositions of the steel slabs contained, in mass%, Si: 2.9 to 3.5%, Mn: 0.05 to 0.10%, N: 0.005 to 0.010%, C: 0.050 to 0.100%, sol. Al: 0.015 to 0.030%, one or more kinds of element selected from the group consisting of S and Se: 0.015 to 0.030% in total, Ti: 0.001 to 0.005%, Ni: 0.01 to 0.10%, Cr: 0.01 to 0.08%, Cu: 0.01 to 0.10%, P: 0.01 to 0.02%, Mo: 0.00 to 0.05%, Sn: 0.01 to 0.20%, Sb: 0.00 to 0.05%, and Bi: 0.0000 to 0.0100%, the remainder being Fe and impurities.

A hot rolling process was performed on the prepared steel slabs. Specifically, the steel slab of each test number was heated to 1340°C in a heating furnace. Hot rolling was performed on the heated steel slabs to produce hot-rolled steel sheets with a thickness of 2.3 mm.

The hot-rolled steel sheets after the hot rolling process were subjected to a hot-rolled sheet annealing process at the hot-rolled sheet annealing temperature from 800 to 1200°C with a holding time from 10 to 300 seconds. After the hot-rolled sheet annealing process, a cold rolling process was performed to produce cold-rolled steel sheets with a thickness of 0.22 mm. Specifically, a first cold rolling process was performed, and then a second cold rolling process was performed. Conditions 1 to 8 were as shown in Table 4.

[Table 4]

TABLE 4

| Test number | Cold rolling process | | | | | | | | Decarburization annealing process |
| | First cold rolling process | | | | Second cold rolling process | | | | |
| | Condition 1 | Condition 2 | Condition 3 | Condition 4 | Condition 5 | Condition 6 | Condition 7 | Condition 8 | Condition 9 |
| | Rolling method | Work roll diameter D1 (mm) | Rolling reduction ratio CR1 (%) | Specific pass count | Heat treatment | Rolling method | Work roll diameter D2 (mm) | Rolling reduction ratio CR2 (%) | Temperature increase rate HR (°C/sec) |
|---|---|---|---|---|---|---|---|---|---|
| 1 | Tandem | 600 | 52 | 3 | No | Reverse | 70 | 80 | 400 |
| 2 | Tandem | 400 | 64 | 3 | No | Reverse | 90 | 73 | 1300 |
| 3 | Tandem | 400 | 62 | 1 | No | Reverse | 90 | 75 | 1000 |
| 4 | Tandem | 600 | 64 | 1 | No | Reverse | 90 | 73 | 1000 |
| 5 | Reverse | 400 | 90 | 2 | - | - | - | - | 400 |
| 6 | Tandem | 150 | 74 | 2 | No | Reverse | 70 | 63 | 400 |
| 7 | Tandem | 400 | 21 | 2 | No | Reverse | 80 | 88 | 400 |
| 8 | Tandem | 400 | 63 | 2 | Yes | Reverse | 80 | 74 | 400 |
| 9 | Tandem | 400 | 64 | 3 | No | Tandem | 90 | 73 | 1300 |
| 10 | Tandem | 400 | 62 | 2 | No | Reverse | 130 | 75 | 400 |
| 11 | Tandem | 400 | 89 | 2 | No | Reverse | 90 | 13 | 400 |
| 12 | Tandem | 400 | 52 | 2 | No | Reverse | 80 | 80 | 300 |

A decarburization annealing process was performed on the cold-rolled steel sheets after the cold rolling process. Specifically, the temperatures of the cold-rolled steel sheets were increased to the achieving temperature of 870°C, and then the cold-rolled steel sheets were held at the decarburization annealing temperature of 830°C for 80 seconds. Then, the cold-rolled steel sheets were left to be cooled to room temperature, and decarburized annealed steel sheets were obtained. Note that at the time of temperature increase, the average temperature increase rates HR when the temperature is increased from 450°C to 800°C were as described in the column "Condition 9", "Temperature increase rate HR (°C/sec)" of "Decarburization annealing process" in Table 4.

An annealing separator composed mainly of MgO was applied to the surfaces of the decarburized annealed steel sheets. Then, the decarburized annealed steel sheets to which the annealing separator was applied were wound and coiled.

Finishing annealing was performed on the coils and finished annealed steel sheets were produced. The finishing annealing temperature was 1100°C to 1200°C, and the holding time at the finishing annealing temperature was 5 to 30 hours.

A secondary coating formation process was performed on the steel sheets after the finishing annealing process. Specifically, a secondary coating forming agent composed mainly of colloidal silica and phosphate was applied to the surface of the finished annealed steel sheet of each test number. Then, the finished annealed steel sheets to which the secondary coating forming agent was applied were baked under the same conditions, whereby secondary coatings were formed on the primary coatings. With the above-described production processes, the grain-oriented electrical steel sheets of the test numbers were produced.

The chemical compositions of the grain-oriented electrical steel sheets of the test numbers were measured based on the above-described [Method for Measuring Chemical Composition of Grain-Oriented Electrical Steel Sheet 1]. As a result, the chemical compositions of the grain-oriented electrical steel sheets of the test numbers were as shown in Table 3.

[Evaluation Test]

Similar to Example 1, (Test 1) KAMave measurement test, (Test 2) Magnetic flux density measurement test, (Test 3) Iron loss evaluation test, and (Test 4) magnetostriction evaluation test were conducted. The obtained results are shown in Table 5.

[Table 5]

TABLE 5

| Test number | Evaluation result | | | | | | | | Remarks |
|---|---|---|---|---|---|---|---|---|---|
| | KAMave (°) | Magnetic flux density $B_8$ (T) | Iron loss $W_{17/50}$ (W/kg) | $W_{ref1}$ | $W_{17/50} \leq W_{ref1}$ | Magnetostrictio n $\lambda$p-p@1.9T ($\times 10^{-6}$) | $W_{ref2}$ | $\lambda$p-p@1.9T$\leq W_{ref2}$ | |
| 1 | 7.0 | 1.933 | 0.810 | 0.818 | T | 0.38 | 0.43 | T | Inventive example |
| 2 | 7.3 | 1.942 | 0.781 | 0.795 | T | 0.36 | 0.39 | T | Inventive example |
| 3 | 8.7 | 1.924 | 0.851 | 0.840 | F | 0.51 | 0.48 | F | Comparative example |
| 4 | 8.2 | 1.932 | 0.834 | 0.820 | F | 0.45 | 0.44 | F | Comparative example |
| 5 | 8.8 | 1.909 | 0.924 | 0.878 | F | 0.58 | 0.56 | F | Comparative example |
| 6 | 8.6 | 1.906 | 0.889 | 0.885 | F | 0.66 | 0.57 | F | Comparative example |
| 7 | 8.4 | 1.907 | 0.884 | 0.883 | F | 0.59 | 0.57 | F | Comparative example |
| 8 | 8.8 | 1.904 | 0.892 | 0.890 | F | 0.61 | 0.58 | F | Comparative example |
| 9 | 8.4 | 1.903 | 0.910 | 0.893 | F | 0.59 | 0.58 | F | Comparative example |
| 10 | 8.7 | 1.904 | 0.894 | 0.890 | F | 0.62 | 0.58 | F | Comparative example |
| 11 | 8.2 | 1.908 | 0.881 | 0.880 | F | 0.58 | 0.56 | F | Comparative example |
| 12 | 9.3 | 1.899 | 0.938 | 0.903 | F | 0.64 | 0.60 | F | Comparative example |

[Evaluation Result]

Referring to Tables 3 to 5, the grain-oriented electrical steel sheets of the test numbers 1 and 2 satisfy Features 1 to 3. Therefore, the magnetic flux densities $B_8$ were 1.910 T or more, and furthermore, the iron losses $W_{17/50}$ were the threshold value $W_{ref1}$ or less, indicating excellent iron loss characteristics. Furthermore, the values of magnetostriction $\lambda$p-p@1.9T are the threshold value $W_{ref2}$ or less, indicating sufficiently low magnetostriction.

On the other hand, the grain-oriented electrical steel sheets of the test numbers 3 and 4 do not satisfy Condition 4 in the production processes. In other words, the number of specific passes in the tandem rolling was less than two. Therefore, the KAMave exceeded 8.0°. Accordingly, the iron losses $W_{17/50}$ exceeded the threshold value $W_{ref1}$, indicating high iron losses. Furthermore, the values of magnetostriction $\lambda$p-p@1.9T exceeded the threshold value $W_{ref2}$, indicating high magnetostriction.

The grain-oriented electrical steel sheets of the test numbers 5 to 12 do not satisfy any of Conditions 1 to 3 and 5 to 9 in the production processes. Therefore, no sufficient magnetic flux density was obtained. Furthermore, KAMave exceeded 8.0°. Therefore, the iron losses $W_{17/50}$ exceeded the threshold value $W_{ref1}$, indicating high iron losses. Furthermore, the values of magnetostriction $\lambda$p-p@1.9T exceeded the threshold value $W_{ref2}$, indicating high magnetostriction.

[EXAMPLE 3]

In Example 3, grain-oriented electrical steel sheets having chemical compositions shown in Tables 6 (Tables 6A and 6B) were produced.

[Table 6A]

TABLE 6A

| Test number | Chemical composition of grain-oriented electrical steel sheet (unit: mass%, the remainder being Fe and impurities) | | | | | | | |
|---|---|---|---|---|---|---|---|---|
| | Si | Mn | N | C | Sol. Al | S | Se | Ti |
| 1 | 3.3 | 0.04 | <0.002 | 0.002 | <0.001 | <0.001 | - | 0.001 |
| 2 | 3.3 | 0.08 | <0.002 | 0.002 | <0.001 | <0.001 | <0.001 | 0.002 |
| 3 | 3.3 | 0.08 | <0.002 | 0.002 | <0.001 | <0.001 | <0.001 | 0.002 |
| 4 | 3.3 | 0.07 | <0.002 | 0.002 | <0.001 | <0.001 | - | 0.001 |
| 5 | 3.4 | 0.08 | <0.002 | 0.003 | <0.001 | <0.001 | - | 0.002 |
| 6 | 3.4 | 0.08 | <0.002 | 0.002 | <0.001 | <0.001 | - | 0.002 |
| 7 | 3.4 | 0.09 | <0.002 | 0.002 | <0.001 | <0.001 | - | 0.002 |
| 8 | 3.2 | 0.07 | <0.002 | 0.002 | <0.001 | <0.001 | - | 0.001 |
| 9 | 3.2 | 0.09 | <0.002 | 0.001 | <0.001 | <0.001 | - | 0.003 |
| 10 | 3.4 | 0.09 | <0.002 | 0.002 | <0.001 | <0.001 | - | 0.002 |
| 11 | 3.3 | 0.10 | <0.002 | 0.002 | <0.001 | <0.001 | - | 0.002 |
| 12 | 3.3 | 0.07 | <0.002 | 0.002 | <0.001 | <0.001 | - | 0.004 |
| 13 | 3.3 | 0.08 | <0.002 | 0.002 | <0.001 | <0.001 | - | 0.001 |
| 14 | 2.8 | 0.09 | <0.002 | 0.002 | <0.001 | <0.001 | - | 0.002 |
| 15 | 3.6 | 0.09 | <0.002 | 0.002 | <0.001 | <0.001 | - | 0.002 |
| 16 | 4.2 | 0.22 | 0.003 | 0.003 | 0.010 | 0.002 | - | 0.008 |
| 17 | 3.9 | 0.08 | <0.002 | 0.004 | 0.001 | <0.001 | 0.001 | 0.001 |
| 18 | 4.5 | 0.12 | <0.002 | 0.006 | 0.004 | 0.001 | - | 0.004 |
| 19 | 2.9 | 1.00 | <0.002 | 0.003 | <0.001 | 0.002 | 0.004 | 0.002 |

(continued)

| Test number | Chemical composition of grain-oriented electrical steel sheet (unit: mass%, the remainder being Fe and impurities) | | | | | | | |
|---|---|---|---|---|---|---|---|---|
| | Si | Mn | N | C | Sol. Al | S | Se | Ti |
| 20 | 3.1 | 0.13 | 0.010 | 0.002 | 0.002 | <0.001 | - | 0.001 |
| 21 | 3.2 | 0.04 | <0.002 | 0.003 | <0.001 | <0.001 | - | 0.003 |
| 22 | 3.1 | 0.08 | <0.002 | 0.002 | <0.001 | <0.001 | - | 0.004 |
| 23 | 3.5 | 0.65 | <0.002 | 0.010 | <0.001 | 0.002 | - | 0.003 |
| 24 | 3.5 | 0.08 | 0.005 | 0.004 | 0.002 | 0.005 | - | 0.003 |
| 25 | 3.3 | 0.08 | <0.002 | 0.002 | <0.001 | <0.001 | - | 0.001 |
| 26 | 3.2 | 0.08 | <0.002 | 0.002 | <0.001 | <0.001 | - | 0.003 |
| 27 | 3.3 | 0.09 | <0.002 | 0.001 | <0.001 | <0.001 | - | 0.001 |
| 28 | 3.4 | 0.08 | <0.002 | 0.002 | <0.001 | <0.001 | - | 0.001 |
| 29 | 3.3 | 0.08 | <0.002 | 0.002 | <0.001 | <0.001 | - | 0.003 |

[Table 6B]

TABLE 6B

| Test number | Chemical composition of grain-oriented electrical steel sheet (unit: mass%, the remainder being Fe and impurities) | | | | | | | |
|---|---|---|---|---|---|---|---|---|
| | Ni | Cr | Cu | P | Mo | Sn | Sb | Bi |
| 1 | - | - | - | - | - | - | - | - |
| 2 | - | - | - | - | - | - | - | - |
| 3 | - | - | - | 0.01 | - | - | - | - |
| 4 | - | - | - | - | - | 0.10 | - | - |
| 5 | - | - | - | - | - | - | 0.06 | - |
| 6 | - | 0.06 | - | - | 0.04 | - | - | - |
| 7 | - | - | 0.05 | - | - | - | - | - |
| 8 | 0.06 | - | - | - | 0.02 | - | - | - |
| 9 | - | - | - | - | - | - | - | 0.0002 |
| 10 | 0.05 | - | - | - | - | 0.08 | - | - |
| 11 | - | - | - | 0.02 | - | - | 0.01 | - |
| 12 | - | 0.04 | 0.04 | - | - | - | - | - |
| 13 | - | 0.06 | - | - | - | 0.08 | - | - |
| 14 | - | - | 0.07 | - | 0.01 | - | - | 0.0001 |
| 15 | - | 0.06 | - | 0.01 | - | - | 0.03 | 0.0002 |
| 16 | 0.89 | - | - | - | - | - | - | - |
| 17 | - | 0.92 | - | - | - | - | - | - |
| 18 | - | - | 1.00 | - | - | - | - | - |
| 19 | - | - | - | 0.44 | - | - | - | - |
| 20 | - | - | - | - | 0.08 | - | - | - |

(continued)

| Test number | Chemical composition of grain-oriented electrical steel sheet (unit: mass%, the remainder being Fe and impurities) | | | | | | | |
|---|---|---|---|---|---|---|---|---|
| | Ni | Cr | Cu | P | Mo | Sn | Sb | Bi |
| 21 | - | - | - | - | - | 0.45 | - | - |
| 22 | - | - | - | - | - | 0.02 | - | - |
| 23 | - | - | - | - | - | - | 0.43 | - |
| 24 | - | - | - | - | - | - | - | 0.0443 |
| 25 | 0.02 | - | 0.06 | - | - | 0.11 | - | - |
| 26 | - | - | 0.03 | 0.01 | - | - | 0.02 | - |
| 27 | 0.01 | 0.06 | - | - | 0.01 | 0.10 | - | 0.0001 |
| 28 | - | 0.04 | 0.11 | - | - | - | - | 0.0001 |
| 29 | 0.02 | 0.02 | - | - | - | 0.05 | - | 0.0001 |

Specifically, steel slabs of test specimens were prepared. The chemical compositions of the steel slabs contained, in mass%, Si: 2.8 to 3.4%, Mn: 0.03 to 0.12%, N: 0.005 to 0.012%, C: 0.050 to 0.100%, sol. Al: 0.012 to 0.030%, one or more kinds of element selected from the group consisting of S and Se: 0.020 to 0.035% in total, Ti: 0.001 to 0.005%, Ni: 0.01 to 0.10%, Cr: 0.04 to 0.08%, Cu: 0.04 to 0.12%, P: 0 to 0.01%, Mo: 0 to 0.03%, Sn: 0 to 0.12%, Sb: 0 to 0.01%, and Bi: 0 to 0.0050%, the remainder being Fe and impurities.

A hot rolling process was performed on the prepared steel slabs. Specifically, the steel slab of each test number was heated to 1340°C in a heating furnace. Hot rolling was performed on the heated steel slab to produce hot-rolled steel sheets with a thickness of 2.3 mm.

The hot-rolled steel sheets after the hot rolling process were subjected to a hot-rolled sheet annealing process at the hot-rolled sheet annealing temperature from 800 to 1200°C with a holding time from 10 to 300 seconds.

After the hot-rolled sheet annealing process, a cold rolling process was performed to produce cold-rolled steel sheets with a thickness of 0.22 mm. Specifically, a tandem rolling process was first performed on the hot-rolled steel sheets to produce intermediate steel sheets. The average diameter D1 of the work rolls in the tandem rolling was 450 mm, and the cumulative rolling reduction ratio CR1 was 65%.

In the tandem rolling, at least two specific passes were performed on the grain-oriented electrical steel sheets of the test numbers 1 to 15. On the other hand, at most one specific pass was performed on the grain-oriented electrical steel sheets of the test numbers 16 to 20.

After the tandem rolling, a reverse rolling process was performed without performing heat treatment on the intermediate steel sheets. The average diameter of the work rolls in the reverse rolling process was 75 mm, and the cumulative rolling reduction ratio CR2 was 73%. With the above-described processes, cold-rolled steel sheets with a sheet thickness of 0.22 mm were produced.

A decarburization annealing process was performed on the cold-rolled steel sheets after the cold rolling process. Specifically, the temperatures of the cold-rolled steel sheets were increased to the achieving temperature of 870°C, and then the cold-rolled steel sheets were held at the decarburization annealing temperature of 830°C for 80 seconds. Then, the cold-rolled steel sheets were left to be cooled to room temperature, and decarburized annealed steel sheets were obtained. Note that at the time of temperature increase, the average temperature increase rate HR when the temperature is increased from 450°C to 800°C was 800°C/sec.

An annealing separator composed mainly of MgO was applied to the surfaces of the decarburized annealed steel sheets. Then, the decarburized annealed steel sheets to which the annealing separator was applied were wound and coiled.

Finishing annealing was performed on the coils and finished annealed steel sheets were produced. The finishing annealing temperature in the finishing annealing was 1100°C to 1200°C, and the holding time at the finishing annealing temperature was 5 to 30 hours.

A secondary coating formation process was performed on the steel sheets after the finishing annealing process. Specifically, a secondary coating forming agent composed mainly of colloidal silica and phosphate was applied to the surface of the finished annealed steel sheet of each test number. Then, the finished annealed steel sheets to which the secondary coating forming agent was applied were baked under the same conditions, whereby secondary coatings were formed on the primary coatings. With the above-described production processes, the grain-oriented electrical steel sheets of the test numbers were produced. Note that the chemical compositions of the grain-oriented electrical steel sheets of the test numbers were measured based on the above-described [Method for Measuring Chemical Composition of Grain-Oriented Electrical Steel Sheet 1]. As a result, the chemical compositions of the grain-oriented electrical steel sheets of the test numbers are shown in Tables 6.

[Evaluation Test]

Similar to Example 1, (Test 1) KAMave measurement test, (Test 2) Magnetic flux density measurement test, (Test 3) Iron loss evaluation test, and (Test 4) magnetostriction evaluation test were conducted. The obtained results are shown in Table 7.

[Table 7]

TABLE 7

| Test number | KAMave (°) | Magnetic flux density $B_8$ (T) | Iron loss $W_{17/50}$ (W/kg) | $W_{ref1}$ | $W_{17/50} \leq W_{ref1}$ | Magnetostriction $\lambda$p-p@1.9T ($\times 10^{-6}$) | $W_{ref2}$ | $\lambda$p-p@1.9T$\leq W_{ref2}$ | Remarks |
|---|---|---|---|---|---|---|---|---|---|
| 1 | 7.6 | 1.918 | 0.831 | 0.855 | T | 0.45 | 0.51 | T | Inventive example |
| 2 | 7.8 | 1.916 | 0.824 | 0.860 | T | 0.41 | 0.52 | T | Inventive example |
| 3 | 7.2 | 1.921 | 0.811 | 0.848 | T | 0.45 | 0.49 | T | Inventive example |
| 4 | 7.1 | 1.930 | 0.799 | 0.825 | T | 0.30 | 0.45 | T | Inventive example |
| 5 | 7.0 | 1.933 | 0.797 | 0.818 | T | 0.31 | 0.43 | T | Inventive example |
| 6 | 7.5 | 1.929 | 0.784 | 0.828 | T | 0.42 | 0.46 | T | Inventive example |
| 7 | 7.7 | 1.921 | 0.838 | 0.848 | T | 0.40 | 0.49 | T | Inventive example |
| 8 | 7.5 | 1.925 | 0.821 | 0.838 | T | 0.39 | 0.48 | T | Inventive example |
| 9 | 7.5 | 1.938 | 0.799 | 0.805 | T | 0.35 | 0.41 | T | Inventive example |
| 10 | 7.4 | 1.931 | 0.779 | 0.823 | T | 0.36 | 0.44 | T | Inventive example |
| 11 | 7.2 | 1.931 | 0.802 | 0.823 | T | 0.40 | 0.44 | T | Inventive example |
| 12 | 7.4 | 1.922 | 0.791 | 0.845 | T | 0.44 | 0.49 | T | Inventive example |
| 13 | 7.5 | 1.933 | 0.781 | 0.818 | T | 0.35 | 0.43 | T | Inventive example |
| 14 | 7.3 | 1.942 | 0.784 | 0.795 | T | 0.38 | 0.39 | T | Inventive example |
| 15 | 7.2 | 1.936 | 0.792 | 0.810 | T | 0.38 | 0.42 | T | Inventive example |
| 16 | 7.9 | 1.921 | 0.821 | 0.848 | T | 0.46 | 0.49 | T | Inventive example |
| 17 | 7.6 | 1.914 | 0.842 | 0.865 | T | 0.51 | 0.53 | T | Inventive example |
| 18 | 7.8 | 1.923 | 0.831 | 0.843 | T | 0.45 | 0.48 | T | Inventive example |
| 19 | 7.1 | 1.931 | 0.801 | 0.823 | T | 0.41 | 0.44 | T | Inventive example |
| 20 | 7.2 | 1.938 | 0.801 | 0.805 | T | 0.39 | 0.41 | T | Inventive example |
| 21 | 7.1 | 1.938 | 0.788 | 0.805 | T | 0.41 | 0.41 | T | Inventive example |
| 22 | 7.4 | 1.924 | 0.801 | 0.840 | T | 0.46 | 0.48 | T | Inventive example |
| 23 | 7.8 | 1.910 | 0.811 | 0.875 | T | 0.49 | 0.55 | T | Inventive example |

(continued)

| Test number | KAMave (°) | Magnetic flux density $B_8$ (T) | Iron loss $W_{17/50}$ (W/kg) | $W_{ref1}$ | $W_{17/50}$ $\leq W_{rer1}$ | Magnetostriction $\lambda$p-p@1.9T ($\times 10^{-6}$) | $W_{ref2}$ | $\lambda$p-p@1.9T$\leq W_{ref2}$ | Remarks |
|---|---|---|---|---|---|---|---|---|---|
| 24 | 7.7 | 1.912 | 0.822 | 0.870 | T | 0.51 | 0.54 | T | Inventive example |
| 25 | 8.3 | 1.924 | 0.861 | 0.840 | F | 0.55 | 0.48 | F | Comparative example |
| 26 | 8.4 | 1.931 | 0.849 | 0.823 | F | 0.55 | 0.44 | F | Comparative example |
| 27 | 8.2 | 1.944 | 0.838 | 0.790 | F | 0.42 | 0.38 | F | Comparative example |
| 28 | 8.3 | 1.938 | 0.839 | 0.805 | F | 0.51 | 0.41 | F | Comparative example |
| 29 | 8.8 | 1.930 | 0.861 | 0.825 | F | 0.50 | 0.45 | F | Comparative example |

[Test Results]

Referring to Tables 6 and 7, all the grain-oriented electrical steel sheets of the test numbers 1 to 24 satisfy Features 1 to 3. Therefore, all the magnetic flux densities $B_8$ were 1.910 T or more, indicating sufficient magnetic flux densities. Furthermore, the iron losses $W_{17/50}$ are the threshold value $W_{ref1}$ or less, indicating sufficient iron loss characteristics. Furthermore, the values of magnetostriction $\lambda$p-p@1.9T are the threshold value $W_{ref2}$ or less, indicating sufficiently low magnetostriction.

On the other hand, the grain-oriented electrical steel sheets of the test numbers 25 to 29 do not satisfy Condition 2. Accordingly, the iron losses $W_{17/50}$ exceeded the threshold value $W_{ref1}$, indicating high iron losses. Furthermore, the values of magnetostriction $\lambda$p-p@1.9T exceeded the threshold value $W_{ref2}$, indicating high magnetostriction.

An embodiment of the present disclosure has been described above. However, the embodiment described above is merely an example for carrying out the present disclosure. Therefore, the present disclosure is not limited to the above-described embodiment, and can be implemented by appropriately modifying the above embodiment within a range that does not depart from the gist of the present disclosure.

REFERENCE SIGNS LIST

10   Base steel sheet

11   Underlayer coating

12   Secondary coating

**Claims**

1. A grain-oriented electrical steel sheet comprising:

   a base steel sheet,
   wherein a chemical composition of the base steel sheet contains, in mass%,
   Si: 2.5 to 4.5%,
   Mn: 0.01 to 1.00%,
   N: 0 to 0.010%,
   C: 0 to 0.010%,
   sol. Al: 0 to 0.010%,
   one or more kinds of element selected from the group consisting of S and Se: 0 to 0.010% in total,
   Ti: more than 0 to 0.010%,
   Ni: 0 to 1.00%,
   Cr: 0 to 1.00%,
   Cu: 0 to 1.00%,
   P: 0 to 0.50%,
   Mo: 0 to 0.10%,
   Sn: 0 to 0.50%,
   Sb: 0 to 0.50%,
   Bi: 0 to 0.0500%, and
   the remainder including Fe and impurities,
   when, by measuring crystal orientations at a plurality of measurement points on a surface of the grain-oriented electrical steel sheet that are arranged in a grid at a pitch of 2 mm in a first direction and in a second direction perpendicular to the first direction using an X-ray diffraction method, with respect to each measurement point, another measurement point that is adjacent to the corresponding measurement point is defined as a first adjacent point, another measurement point that is adjacent to an n-th (n is a natural number) adjacent point is defined as an (n+1)-th adjacent point, and an arithmetic mean value of misorientations of all the adjacent points from the first to fifth adjacent points is defined as a KAM of the corresponding measurement point, an arithmetic mean value KAMave of KAMs of the measurement points is 8.0° or less, and
   a magnetic flux density $B_8$ is 1.910 T or more.

2. The grain-oriented electrical steel sheet according to claim 1,

wherein the chemical composition contains one or more kinds of elements selected from a group consisting of, in mass%:

Ni: 0.01 to 1.00%;
Cr: 0.01 to 1.00%;
Cu: 0.01 to 1.00%;
P: 0.01 to 0.50%;
Mo: 0.01 to 0.10%;
Sn: 0.01 to 0.50%;
Sb: 0.01 to 0.50%; and
Bi: 0.0001 to 0.0500%.

## FIG.1

Rolled surface normal direction axis

α

<001>

{110}<001>

<001>

Rolling direction axis

γ

β

Rolling-perpendicular direction axis

## FIG.2

Magnetic flux density B$_8$ (T)

1.930

1.925

1.920

1.915

1.910

1.905

1.900

| Pattern 1<br>Two specific<br>passes | Pattern 2<br>One specific<br>pass | Pattern 3<br>Two specific<br>passes | Pattern 4<br>One specific<br>pass |
|---|---|---|---|
| Tandem + Reverse | | Reverse | |

FIG.3

FIG.4

FIG.5

FIG.6

FIG.7

```
                5
             5  4  5
          5  4  3  4  5
       5  4  3  2  3  4  5
    5  4  3  2  1  2  3  4  5
 5  4  3  2  1  0  1  2  3  4  5
    5  4  3  2  1  2  3  4  5
       5  4  3  2  3  4  5
          5  4  3  4  5
             5  4  5
                5
```

FIG. 8

50 mm

KAM value: 0.3 to 20

FIG.9

FIG. 10

FIG. 11

FIG. 12

# EP 4 647 524 A1

## INTERNATIONAL SEARCH REPORT

| | International application No. |
|---|---|
| | **PCT/JP2024/000088** |

### A. CLASSIFICATION OF SUBJECT MATTER

*C22C 38/00*(2006.01)i; *C22C 38/60*(2006.01)i; *H01F 1/147*(2006.01)i; *C21D 8/12*(2006.01)n; *C21D 9/46*(2006.01)n
FI: C22C38/00 303U; C22C38/60; H01F1/147 175; C21D8/12 B; C21D8/12 D; C21D9/46 501B

According to International Patent Classification (IPC) or to both national classification and IPC

### B. FIELDS SEARCHED

Minimum documentation searched (classification system followed by classification symbols)

C22C38/00-C22C38/60; H01F1/147; C21D8/12; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/027219 A1 (NIPPON STEEL CORPORATION) 06 February 2020 (2020-02-06) entire text, all drawings | 1-2 |
| A | JP 2020-169374 A (NIPPON STEEL CORPORATION) 15 October 2020 (2020-10-15) entire text, all drawings | 1-2 |
| A | JP 2021-123755 A (NIPPON STEEL CORPORATION) 30 August 2021 (2021-08-30) entire text, all drawings | 1-2 |
| A | JP 2003-266102 A (NIPPON STEEL CORP.) 24 September 2003 (2003-09-24) entire text, all drawings | 1-2 |
| A | CN 103278517 A (CENTRAL IRON & STEEL RESEARCH INSTITUTE) 04 September 2013 (2013-09-04) entire text, all drawings | 1-2 |
| P, A | JP 2023-155059 A (NIPPON STEEL CORPORATION) 20 October 2023 (2023-10-20) entire text, all drawings | 1-2 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 March 2024** | **26 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/000088**

| Patent document cited in search report | | | Publication date (day/month/year) | Patent family member(s) | | | Publication date (day/month/year) |
|---|---|---|---|---|---|---|---|
| WO | 2020/027219 | A1 | 06 February 2020 | US | 2022/0372589 | A1 | |
| | | | | entire text, all drawings | | | |
| | | | | EP | 3831977 | A1 | |
| | | | | CN | 112513305 | A | |
| | | | | KR | 10-2021-0024076 | A | |
| | | | | BR | 112021000333 | A2 | |
| | | | | RU | 2764622 | C1 | |
| JP | 2020-169374 | A | 15 October 2020 | (Family: none) | | | |
| JP | 2021-123755 | A | 30 August 2021 | (Family: none) | | | |
| JP | 2003-266102 | A | 24 September 2003 | (Family: none) | | | |
| CN | 103278517 | A | 04 September 2013 | (Family: none) | | | |
| JP | 2023-155059 | A | 20 October 2023 | (Family: none) | | | |

Form PCT/ISA/210 (patent family annex) (July 2022)

**REFERENCES CITED IN THE DESCRIPTION**

**Patent documents cited in the description**

- JP 2018048377 A

- JP 2001192785 A